# EUROPEAN PATENT SPECIFICATION

(11) **EP 1 421 090 B1**
(45) Date of publication and mention of the grant of the patent: **26.03.2014**
(21) Application number: 02756172.9
(22) Date of filing: 14.06.2002
(51) Int. Cl.: C07F 17/00

(54) **METALLOCENES AND CATALYST COMPOSITIONS DERIVED THEREFROM**
METALLOCENE UND DIESE ENTHALTENDE KATALYSATORZUSAMMENSETZUNGEN
METALLOCÈNES ET COMPOSITIONS CATALYTIQUES DÉRIVÉES DE CEUX-CI

(30) Priority: 29.06.2001 US 896496; 29.06.2001 US 896494
(43) Date of publication of application: 26.05.2004
(73) Proprietor: ExxonMobil Chemical Patents Inc., Baytown, TX 77520-2101 (US)
(72) Inventor: HART, James, R., Fort Collins, CO 80526 (US); HAYGOOD, William, T., Houston, TX 77070 (US); BURKHARDT, Terry, J., Kingwood, TX 77345 (US); LI, Robert, T., Houston, TX 77059 (US)
(74) Representative: Dew, Melvyn John
(86) International application number: PCT/US2002/018718
(87) International publication number: WO 2003/002583

(56) References cited:
- EP-A- 0 576 970
- EP-A- 0 846 696
- WO-A-01/58970
- WO-A-02/02575
- WO-A-98/40331
- WO-A-99/12943
- WO-A-99/50274
- WO-A-99/50312
- US-A- 5 840 644
- US-A- 5 936 053
- US-A1- 2001 025 115
- US-B1- 6 252 097

## Description

### FIELD

This invention relates to metallocene compounds and their use in the preparation of catalyst compositions for olefin polymerization, particularly propylene homo- and copolymerization. The present invention also relates to polymerisation processes using such catalyst compositions and polymer compositions obtainable by these processes.

### BACKGROUND

The use of metallocene compositions in olefin polymerization is well known. Metallocenes containing substituted, bridged indenyl derivatives are noted for their ability to produce isotactic propylene polymers having high isotacticity and narrow molecular weight distribution. Considerable effort has been made toward obtaining metallocene produced propylene polymers having ever-higher molecular weight and melting point and, thus, ever better strength (impact) properties, while maintaining suitable catalyst activity.

Toward this end researchers have found that there is a direct relationship between the way in which a metallocene is substituted and the molecular structure of the resulting polymer. For the substituted, bridged indenyl type metallocenes, it is now well established that the type and arrangement of substituents on the indenyl groups, as well as the type of bridge connecting the indenyl groups, determines such polymer attributes as molecular weight and melting point.

For example, U. S. Patent Nos. 5,840,644 and 5,770,753 describe certain metallocenes containing aryl-substituted indenyl derivatives as ligands, which are said to provide propylene polymers having high isotacticity, narrow molecular weight distribution and very high molecular weight.

Likewise, U. S. Patent No. 5,936,053 describes certain metallocene compounds said to be useful for producing high molecular weight propylene polymers. These metallocenes have a specific hydrocarbon substituent at the 2 position and an unsubstituted aryl substituent at the 4 position on each indenyl group of the metallocene compound.

US 2001/0025115A, published 27 September 2001, discloses a process for forming bridged Group 4 transition metal complexes using boron tahalide and a magnesium dicyclopentadienyl compound. WO 01/58970A1 discloses processes for preparing propylene impact copolymers using metallocene catalysts. One example is racemic dimethylsiladiyl (2-isopropyl-4-[2-methyl-phenyl] indenyl)₂ zirconium dichloride.

WO 98/40419 and WO 99/42497 both describe certain supported catalyst systems for producing propylene polymers having high melting point. Metallocene compositions and their activators are often combined with a support material in order to obtain a catalyst system that is less likely to cause reactor fouling. However, it is known that supported metallocene catalyst systems tend to result in a polymer having lower melting point than would otherwise be obtained if the metallocene were not supported.

Much of the current research in this area has been directed toward using metallocene catalyst systems under commercially relevant process conditions, to obtain propylene polymers having melting points higher than known metallocene catalyst systems and close to, or as high as, propylene polymers obtained using conventional, Ziegler-Natta catalyst systems. The present inventors have discovered metallocene compounds that not only have this capability, but retain it upon supportation.

Additionally, it would be desirable to have available metallocenes which not only afford propylene homopolymers having high melting points of (i.e., high stereotacticity), but also elastomeric copolymers having the high molecular weights required for the production of, e.g., impact copolymers, thereby making possible the production of satisfactory *in situ* blends of, e.g., propylene homopolymer and ethylene-propylene rubbers (EPR's) with a single catalyst composition in a single reactor or in a series of two or more reactors. The present inventors have found metallocene compounds which in combination with a cocatalyst (activator) make both propylene homopolymers having high melting points and elastomeric copolymers that are suitable for the production of impact copolymers in combination with these propylene homopolymers.

### SUMMARY OF THE INVENTION

The present invention relates to novel metallocene compounds capable of providing propylene homo- and copolymers having high melting point and high molecular weight. The present invention further relates to metallocene catalyst compositions comprising one or more of these compounds and one or more activators or cocatalysts, and optionally, support material, and to the use of such catalyst compositions in polymerization, in particular propylene polymerization.

In one aspect, the present invention provides compounds represented by formula (I): 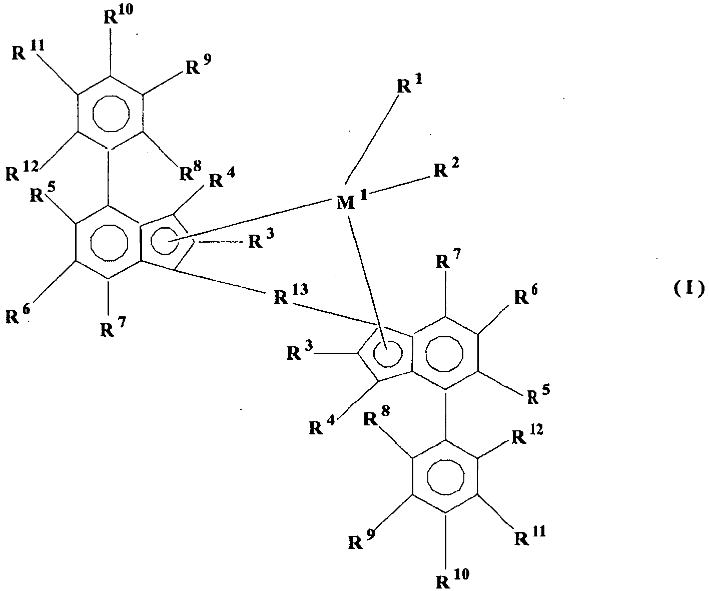 wherein:
M¹ is selected from zirconium or hafnium;
R¹ and R² are selected from hydrogen, halogen, hydroxy, C₁-C₁₀ alkyl groups, C₁-C₁₀ alkoxy groups, C₆-C₁₄ aryl groups, C₆-C₁₄ aryloxy groups, C₂-C₁₀ alkenyl groups, C₇-C₄₀ arylalkyl groups, C₇-C₄₀ alkylaryl groups and C₇-C₄₀ arylalkenyl groups; or R¹ and R² are joined together to form a C₄-C₄₀ alkanediyl group or a conjugated C₄-C₄₀ diene ligand which is coordinated to M¹ in a metallacyclopentene fashion; or R¹ and R² represent a conjugated diene, optionally substituted with one or more groups independently selected from hydrocarbyl, trihydrocarbylsilyl and trihydrocarbylsilylhydrocarbyl groups, said diene having a total of up to 40 atoms not counting hydrogen and forming a π complex with M¹;
R³ is selected from isopropyl, isobutyl, sec-butyl, tert-butyl and phenyl groups;
R⁴, R⁵, R⁶ and R⁷ are each independently selected from hydrogen, halogen, C₁-C₁₀ alkyl groups, C₆-C₁₄ aryl groups, C₂-C₁₀ alkenyl groups, C₇-C₄₀ arylalkyl groups, C₇-C₄₀ alkylaryl groups, C₈-C₄₀ arylalkenyl groups, and -NR'₂, -SR', -OR', -SiR'₃, -OSiR'₃ and -PR'₂ radicals wherein each R' is independently selected from halogen, C₁-C₁₀ alkyl groups and C₆-C₁₄ aryl groups; or two or more adjacent radicals R⁵, R⁶ and R⁷ together with the atoms connecting them may form one or more rings;
R⁸, R⁹, R¹⁰ and R¹¹ are each independently as defined for R⁴, R⁵, R⁶ and R⁷, provided that two or more adjacent radicals R⁸, R⁹, R¹⁰ and R¹¹ together with the atoms connecting them may form one or more rings ;
R¹² is selected from n-propyl, isopropyl, n-butyl, isobutyl, sec-butyl, tert-butyl, phenyl, tolyl, benzyl and naphthyl groups;
R¹³ is selected from 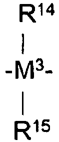 wherein:
   R¹⁴ and R¹⁵ are each independently selected from hydrogen, halogen, C₁-C₂₀ alkyl groups, C₆-C₃₀ aryl groups, C₁-C₂₀ alkoxy groups, C₂-C₂₀ alkenyl groups, C₇-C₄₀ arylalkyl groups, C₈-C₄₀ arylalkenyl groups and C₇-C₄₀ alkylaryl groups, or R¹⁴ and R¹⁵, together with the atom(s) connecting them, form a ring; and M³ is selected from carbon and silicon.

In preferred embodiments of the above compound, M¹ is selected from zirconium and hafnium and R¹ and R² are selected from chlorine, C₁-C₆ alkyl groups, C₆-C₁₀ aryl groups, C₇-C₁₂ arylalkyl groups and C₇-C₁₂ alkylaryl groups.

R³ may be a branched C₃-C₄ alkyl group and, in particular, an isopropyl group, or may be a phenyl group.

Preferably at least one of R⁴ and R⁸, and most preferred both of them, represent hydrogen atoms.

R¹² may preferably be phenyl. In another embodiment, R¹¹ is different from hydrogen and may represent, e.g., a C₁-C₄ alkyl group.

Particularly preferred compounds of the above formula include those wherein R¹ and R² are selected from chlorine, methyl, neopentyl and benzyl, and each of R⁴ and R⁸ is hydrogen. R¹ and R² are selected from chlorine, C₁-C₃ alkyl groups and C₆-C₁₀ aryl groups; R³ is selected from isopropyl, isobutyl, sec-butyl, tert-butyl and phenyl groups; R⁴ and R⁸ are hydrogen; R⁵, R⁶, R⁷, R⁹, R¹⁰ and R¹¹ are each independently selected from hydrogen, halogen and C₁-C₃ alkyl groups; and R¹³ is selected from di(C₁-C₄ alkyl)silanediyl, diphenylsilanediyl, (C₁-C₄ alkyl)phenylsilanediyl, and diphenylmethanediyl.

Other preferred compounds of the above formula may comprise not more than 2 % of the meso isomer.

In another aspect the metallocenes of this invention are represented by the above formula (I), wherein:
R¹ and R² are selected from hydrogen, halogen, hydroxy, C₁-C₁₀ alkyl groups, C₁-C₁₀ alkoxy groups, C₆-C₁₄ aryl groups, C₆-C₁₄ aryloxy groups, C₂-C₁₀ alkenyl groups, C₇-C₄₀ arylalkyl groups, C₇-C₄₀ alkylaryl groups and C₇-C₄₀ arylalkenyl groups; or R¹ and R² are joined together to form a conjugated C₄-C₄₀ diene ligand which is coordinated to M¹ in a metallacyclopentene fashion; or R¹ and R² represent a conjugated diene, optionally substituted with one or more groups independently selected from hydrocarbyl, trihydrocarbylsilyl and trihydrocarbylsilylhydrocarbyl groups, said diene having a total of up to 40 atoms not counting hydrogen and forming a π complex with M¹;
R¹³ is selected from di(C₆-C₁₂ aryl))silanediyl, and (C₁-C₆ alkyl)(C₆-C₁₂ aryl)silanediyl.

Preferred embodiments of these compounds are those already given above.

The present invention also provides a catalyst composition which comprises the product of a compound of at least one of the above metallocene compounds of the present invention and a cocatalyst. The cocatalyst may be a compound comprising a noncoordinating anion (e.g., a noncoordinating anion comprising at least one unit of the formula -B(C₆F₅)₃) and/or may be an alumoxane, e.g., methylalumoxane. The catalyst composition may comprises a support material, e.g., an inorganic material such as silica, alumina, silica-alumina and magnesium chloride.

Preferred support materials include silica having a surface area ranging from 10 to 700 m²/g, a total pore volume ranging from 0.1 to 4.0 cc/g and an average particle size ranging from 10 to 500 µm.

Another aspect of the present invention is a polymerization process which comprises contacting, under polymerization conditions, one or more ethylenically unsaturated monomers and a catalyst composition as defined above.

The ethylenically unsaturated monomers preferably are selected from monoolefins, diolefins and mixtures thereof. Illustrative and non-limiting examples of suitable monoolefins are compounds of the formula R^{a}CH=CHR^{b} wherein R^{a} and R^{b} are each independently selected from hydrogen, alkyl and alkenyl radicals having 1 to 14 carbon atoms or, together with the carbon atoms to which they are connected, form a ring having 4 to 8 carbon atoms. Preferred monoolefins include ethylene and α-olefins having from 3 to 12 carbon atoms such as, e.g., propylene, 1-butene, 4-methyl-1-pentene, 1-hexene, 1-octene and mixtures thereof. In a preferred embodiment, the ethylenically unsaturated monomers consist essentially of ethylene and propylene.

In one aspect of the above process the temperature ranges from about 30° C to about 80° C. In another aspect, the process is carried out at a pressure ranging from about 5 to about 64 bar.

The present invention also provides a polymer composition comprising: (a) propylene polymer comprising at least about 99 % by weight of units derived from propylene and having a melting point of at least about 155° C; and (b) olefin copolymer comprising from about 40 to about 70 % by weight of units derived from propylene and having an intrinsic viscosity of at least about 1.8; the composition made with a single catalyst composition. Component (a) may be a homopolypropylene or a copolymer of propylene and at least one monoolefin selected from ethylene and α-olefins having from 4 to 12 carbon atoms, the copolymer containing at least about 99.5 % by weight of units derived from propylene. Component (b) may contain from about 30 to about 60 % by weight of ethylene and/or components (a) and (b) together may contain a total of about 1.5 to about 20 % by weight of ethylene.

In a preferred composition of the present invention component (a) has a melting point of at least about 156°C, more preferred at least about 157° C, and/or component (b) has an intrinsic viscosity of at least about 2.0, more preferred at least about 2.2. The composition preferably has a molecular weight distribution, M_{w}/Mₙ, of not higher than about 3.5, more preferably not higher than about 3.0.

In another preferred embodiment the catalyst composition used to make the polymer composition is based on a bridged zirconocene compound.

### DETAILED DESCRIPTION

In the following detailed description, unless otherwise stated, all percentages, parts, ratios, etc., are by weight.

Also, unless otherwise stated, a reference to a compound or component includes the compound or component by itself, its individual stereoisomers and any mixtures thereof, of as well as any combination with other compounds or components, such as mixtures of compounds.

Further, when an amount, concentration, or other value or parameter, is given as a list of upper preferable values and lower preferable values, this is to be understood as specifically disclosing all ranges formed from any pair of an upper preferred value and a lower preferred value, regardless whether ranges are separately disclosed.

Additionally, as utilized herein, the following terms have the meanings indicated below.

The term "product" in connection with the catalyst composition of the present invention includes any species that is different in any respect from the completely independent and individual materials, i.e., the metallocene compound (catalyst precursor) and the cocatalyst (activator). By way of illustrative, non-limiting example, these individual materials may have interacted or even reacted, giving rise to a contact product and/or reaction product.

The term "alkyl", means a straight-chain, branched-chain or cyclic alkyl radical. Examples of such radicals include, but are not limited to, methyl, ethyl, n-propyl, isopropyl, n-butyl, isobutyl, sec-butyl, tert-butyl, pentyl, iso-amyl, hexyl, 2-ethylhexyl, octyl, cyclopentyl, cyclohexyl and the like. The cyclic alkyl radicals may be substituted with one or more straight-chain and/or branched-chain alkyl radicals (i.e., may be alkylcycloalkyl radicals such as , e.g., methylcyclohexyl etc.). Conversely, the straight-chain and branched-chain alkyl radicals may be substituted with one or more cyclic alkyl radicals (i.e., may be cycloalkylalkyl radicals such as cyclohexylmethyl etc.). Moreover, unless indicated otherwise, the above alkyl radicals may be substituted by one or more groups preferably and independently selected from halogen (e.g., F, Cl, Br), alkoxy (e.g., methoxy, ethoxy, propoxy, butoxy and the like), hydroxy, amino, monoalkylamino (e.g., methylamino, ethylamino, propylamino and the like) and dialkylamino (e.g., dimethylamino, diethylamino, dipropylamino, diisopropylamino, piperidino and the like) and trihydrocarbylsilyl (e.g., trimethylsilyl, triphenylsilyl and the like).

The term "alkenyl" means "alkyl" as defined above having one or more double and/or triple bonds. Examples of alkenyl radicals include, but are not limited to, ethenyl, propenyl, allyl, butenyl, propargyl, 1,4-butadienyl, isopropenyl, cyclopentenyl, cyclohexenyl, cyclooctenyl, cyclopentadienyl, cyclohexadienyl, cyclooctadienyl and the like.

The term "alkoxy" means an alkyl or alkenyl ether radical wherein the terms "alkyl" and "alkenyl" are as defined above. Examples of suitable alkyl ether radicals include, but are not limited to, methoxy, ethoxy, n-propoxy, isopropoxy, n-butoxy, iso-butoxy, sec-butoxy, tert-butoxy, allyloxy, trifluoromethoxy and the like.

The term "aryl" means an aromatic radical, for example, a phenyl, naphthyl, azulenyl, phenanthryl or anthracenyl radical and the like which optionally contains one or more (e.g., 2 or 3) heteroatoms (preferably selected from N, O and S and combinations thereof) in the ring and/or carries one or more identical or different substituents, for example, alkoxy, aryl, halogen, hydroxy, amino, monoalkylamino, dialkylamino, nitro, trihydrocarbylsilyl, alkyl-CO, alkylsulfonyl, alkyl-OCO etc., these terms being as defined herein. Illustrative, non-limiting examples of aryl radicals are phenyl, naphthyl, fluorenyl, chlorophenyl, dichlorophenyl, fluorophenyl, perfluorophenyl, hydroxyphenyl, anisyl, biphenyl, nitrophenyl, acetylphenyl, aminophenyl, pyridyl, pyridazyl, quinolyl, and the like. When carbon numbers are given herein for aryl radicals, ring heteroatoms are counted as carbon atoms.

The term "aryloxy" means an aryl ether radical wherein the term "aryl" is as defined above.

The term "alkylaryl" means an aryl radical carrying at least one alkyl and/or alkenyl radical as ring substituent, the terms "aryl", "alkyl" and "alkenyl" being as defined above. Illustrative, non-limiting examples of alkylaryl groups are tolyl, xylyl, mesityl, ethylphenyl, trifluoromethylphenyl, vinylphenyl, cumyl, methylpyridyl and the like.

The term "arylalkyl" means an alkyl radical carrying at least one aryl group wherein the terms "aryl" and "alkyl" are as defined above, provided that the aryl radical may have one or more alkyl substituents. Illustrative, non-limiting examples of arylalkyl groups are benzyl, phenethyl, diphenylmethyl, tolylmethyl, naphthylmethyl and the like.

The term "arylalkenyl" means an alkenyl radical carrying at least one aryl substituent wherein the terms "aryl" and "alkenyl" are as defined above, provided that the aryl radical may have one or more alkyl substituents. Illustrative, non-limiting examples of arylalkenyl groups are styryl, methylstyryl, phenylpropenyl, 1-phenyl-1,4-butadienyl and the like.

The term "halogen" means fluorine, chlorine, bromine and iodine.

The term "hydrocarbyl" encompasses alkyl, alkenyl, arylalkyl, arylalkenyl and alkylaryl groups as defined above. Preferred hydrocarbyl groups comprise 1 to 20, more preferred 1 to 10, and most preferred 1 to 6 carbon atoms. Illustrative, non-limiting examples are methyl, ethyl, propyl and phenyl.

Unless specified otherwise herein, preferred meanings of the various groups defined above are:
Alkyl: linear and branched alkyl groups having 1 to 8, particularly 1 to 6, and even more preferred, 1 to 4 carbon atoms (such as, e.g., methyl, ethyl, propyl and isopropyl). If present, substituents are preferably selected from halogen and alkoxy, more preferred from F, Cl, methoxy and ethoxy, most preferred from F and Cl.
Alkoxy: the preferred alkyl groups connected to an oxygen atom, more preferred methoxy and ethoxy.
Alkenyl: linear and branched alkenyl groups having 2 to 8, particularly 2 to 6, and even more preferred, 2 to 4 carbon atoms (such as, e.g., vinyl, allyl, and 2-butenyl). If present, substituents are preferably selected from halogen and alkoxy, more preferred from F, Cl, methoxy and ethoxy, most preferred from F and Cl.
Aryl: aryl groups containing 6 to 12, more preferred 6 to 10 carbon atoms, such as, e.g., phenyl, naphthyl and biphenyl. Preferably no heteroatoms are present in the ring system. If present, substituents are preferably selected from halogen and alkoxy, more preferred from F, Cl, methoxy and ethoxy, most preferred from F and Cl.
Aryloxy: the preferred aryl groups attached to an oxygen atom. Most preferred are phenoxy and naphthoxy.
Arylalkyl and alkylaryl: the preferred aryl groups in combination with the preferred alkyl groups, the total number of carbon atoms being 7 to 20, more preferred 7 to 12. Particularly preferred examples include benzyl, phenethyl, tolyl and xylyl.
Arylalkenyl: the preferred aryl groups in combination with the preferred alkenyl groups, the total number of carbon atoms being 8 to 20, more preferred 8 to 12. Particularly preferred examples include styryl and chlorostyryl.
Halogen: F, Cl and Br, more preferred F and Cl.

Preferred meanings of the various constituents of the compounds of formula (I) above are as follows, it being understood that these preferred meanings are defined as above, including the preferred embodiments of a particular meaning. For example, "alkyl" means an alkyl group as defined above, preferred meanings thereof being also as defined above.
M¹: zirconium and hafnium, with zirconium being most preferred.
R¹ and R²: halogen (more preferred Cl and Br), alkyl (more preferred methyl and neopentyl), aryl (more preferred phenyl), alkylaryl (more preferred tolyl) and arylalkyl (more preferred benzyl); or R¹ and R² are joined together to form a C₄-₆ alkanediyl group or a conjugated C₄-C₆ diene ligand which is coordinated to M¹ in a metallacycloalkane or -cycloalkene fashion; or R¹ and R² represent a conjugated diene, optionally substituted with one or more groups independently selected from alkyl, aryl, trialkylsilyl and trialkylsilylalkyl groups, said diene having a total of up to 30, e.g., up to 24 atoms not counting hydrogen and forming a π complex with M¹. Illustrative, non-limiting examples of conjugated dienes are 1,4-diphenyl-1,3-butadiene, 1,3-pentadiene, 2-methyl-1,3-pentadiene, 2,4-hexadiene, 1-phenyl-1,3-pentadiene, 1,4-dibenzyl-1,3-butadiene, 1,4-ditolyl-1,3-butadiene, 1,4-bis(trimethylsilyl)-1,3-butadiene, and 1,4-dinaphthyl-1,3-butadiene. While R¹ and R² may be different, they are preferably the same. The most preferred meanings of R¹ and R² are Cl and methyl.
R³: isopropyl, isobutyl, sec-butyl, tert-butyl and phenyl. Most preferred is isopropyl.
R⁴, R⁵, R⁶ and R⁷: hydrogen, alkyl and aryl (particularly phenyl), more preferred hydrogen and alkyl. Illustrative, non-limiting examples are hydrogen, methyl and ethyl. For R⁴ a particularly preferred meaning is hydrogen. In another preferred embodiment, all of R⁴, R⁵, R⁶ and R⁷ are hydrogen.
R⁸, R⁹, R¹⁰ and R¹¹: hydrogen, alkyl, arylalkyl (particularly benzyl) and aryl (particularly phenyl), more preferred hydrogen and alkyl. Illustrative, non-limiting examples are hydrogen, methyl and ethyl. For R⁸ a particularly preferred meaning is hydrogen. In another preferred embodiment, all of R⁸, R⁹, R¹⁰ and R¹¹ are hydrogen. While in still another preferred embodiment at least one of R⁹ and R¹¹ is different from hydrogen, it is particularly preferred for R¹¹ to be different from hydrogen when R¹² represents methyl or ethyl.
R¹²: n-propyl, isopropyl, n-butyl, isobutyl, sec-butyl, tert-butyl, phenyl, naphthyl, (o-, m- and p-)tolyl, and benzyl. In particular, isopropyl and phenyl. Most preferred is phenyl.
R¹³: dialkylsilanediyl, diarylsilanediyl, (aryl)(alkyl)silanediyl, alkylene, arylalkylene and arylene, the latter groups being derived from the defined alkyl, arylalkyl and aryl radicals. More preferred as alkyl and aryl groups are methyl, ethyl, propyl, butyl and phenyl. More preferred alkylene, arylalkylene and arylene radicals are ethylene, propylene, butylene, phenylmethylene and diphenylmethylene as well as phenylene. More preferred dialkylsilanediyl, diarylsilanediyl and (aryl)(alkyl)silanediyl radicals are dimethylsilanediyl, diethylsilanediyl, dipropylsilanediyl, dibutylsilanediyl, methylphenylsilanediyl and diphenylsilanediyl. R¹³ is usually connected to the 1-positions of the indenyl ring systems.

The following are particularly preferred metallocenes:
dimethylsilanediylbis {1-[2-isopropyl, 4-(2-n-propylphenyl)indenyl]}zirconium dichloride;
dimethylsilanediylbis{1-[2-isobutyl, 4-(2-n-propylphenyl)indenyl]}zirconium dichloride;
dimethylsilanediylbis{1-[2-sec-butyl, 4-(2-n-propylphenyl)indenyl]}zirconium dichloride;
dimethylsilanediylbis{1-[2-tert-butyl, 4-(2-n-propylphenyl)indenyl]}zirconium dichloride;
dimethylsilanediylbis{1-[2-phenyl, 4-(2-n-propylphenyl)indenyl]}zirconium dichloride;
dimethylsilanediylbis{1-[2-isopropyl, 4-(2-isopropylphenyl)indenyl]}zirconium dichloride;
dimethylsilanediylbis{1-[2-isobutyl, 4-(2-isopropylphenyl)indenyl]}zirconium dichloride;
dimethylsilanediylbis{1-[2-sec-butyl, 4-(2-isopropylphenyl)indenyl]}zirconium dichloride;
dimethylsilanediylbis{1-[2-tert-butyl, 4-(2-isopropylphenyl)indenyl]}zirconium dichloride;
dimethylsilanediylbis{1-[2-phenyl, 4-(2-isopropylphenyl)indenyl]}zirconium dichloride;
dimethylsilanediylbis{1-[2-isopropyl, 4-(2-n-butylphenyl)indenyl]}zirconium dichloride;
dimethylsilanediylbis{1-[2-isobutyl, 4-(2-n-butylphenyl)indenyl]}zirconium dichloride;
dimethylsilanediylbis{1-[2-sec-butyl, 4-(2-n-butylphenyl)indenyl]}zirconium dichloride;
dimethylsilanediylbis{1-[2-tert-butyl, 4-(2-n-butylphenyl)indenyl]}zirconium dichloride;
dimethylsilanediylbis{1-[2-phenyl, 4-(2-n-butylphenyl)indenyl]}zirconium dichloride;
dimethylsilanediylbis{1-[2-isopropyl, 4-(2-isobutylphenyl)indenyl]}zirconium dichloride;
dimethylsilanediylbis{1-[2-isobutyl, 4-(2-isobutylphenyl)indenyl]}zirconium dichloride;
dimethylsilanediylbis{1-[2-sec-butyl, 4-(2-isobutylphenyl)indenyl]}zirconium dichloride;
dimethylsilanediylbis{1-[2-tert-butyl, 4-(2-isobutylphenyl)indenyl]}zirconium dichloride;
dimethylsilanediylbis{1-[2-phenyl, 4-(2-isobutylphenyl)indenyl]}zirconium dichloride;
dimethylsilanediylbis{1-[2-isopropyl, 4-(2-sec-butylphenyl)indenyl]}zirconium dichloride;
dimethylsilanediylbis{1-[2-isobutyl, 4-(2-sec-butylphenyl)indenyl]}zirconium dichloride;
dimethylsilanediylbis{1-[2-sec-butyl, 4-(2-sec-butylphenyl)indenyl]}zirconium dichloride;
dimethylsilanediylbis{1-[2-tert-butyl, 4-(2-sec-butylphenyl)indenyl]}zirconium dichloride;
dimethylsilanediylbis{1-[2-phenyl, 4-(2-sec-butylphenyl)indenyl]}zirconium dichloride;
dimethylsilanediylbis{1-[2-isopropyl, 4-(2-tert-butylphenyl)indenyl]}zirconium dichloride;
dimethylsilanediylbis{1-[2-isobutyl, 4-(2-tert-butylphenyl)indenyl]}zirconium dichloride;
dimethylsilanediylbis{1-[2-sec-butyl, 4-(2-tert-butylphenyl)indenyl]}zirconium dichloride;
dimethylsilanediylbis{1-[2-tert-butyl, 4-(2-tert-butylphenyl)indenyl]}zirconium dichloride;
dimethylsilanediylbis{1-[2-phenyl, 4-(2-tert-butylphenyl)indenyl]}zirconium dichloride;
dimethylsilanediylbis{1-[2-isopropyl, 4-(2-biphenyl)indenyl]}zirconium dichloride;
dimethylsilanediylbis{1-[2-isobutyl, 4-(2-biphenyl)indenyl]}zirconium dichloride;
dimethylsilanediylbis{1-[2-sec-butyl, 4-(2-biphenyl)indenyl]}zirconium dichloride;
dimethylsilanediylbis{1-[2-tert-butyl, 4-(2-biphenyl)indenyl]}zirconium dichloride;
dimethylsilanediylbis{1-[2-phenyl, 4-(2-biphenyl)indenyl]}zirconium dichloride;
dimethylsilanediylbis{1-[2-isopropyl, 4-(2-α-naphthylphenyl)indenyl]}zirconium dichloride;
dimethylsilanediylbis{1-[2-isobutyl, 4-(2-α-naphthylphenyl)indenyl]}zirconium dichloride;
dimethylsilanediylbis{1-[2-sec-butyl, 4-(2-α-naphthylphenyl)indenyl]}zirconium dichloride;
dimethylsilanediylbis{1-[2-tert-butyl, 4-(2-α-naphthylphenyl)indenyl]}zirconium dichloride;
dimethylsilanediylbis{1-[2-phenyl, 4-(2-α-naphthylphenyl)indenyl]}zirconium dichloride;
dimethylsilanediylbis{1-[2-isopropyl, 4-(2-β-naphthylphenyl)indenyl]}zirconium dichloride;
dimethylsilanediylbis {1-[2-isobutyl, 4-(2-β-naphthylphenyl)indenyl]}zirconium dichloride;
dimethylsilanediylbis{1-[2-sec-butyl, 4-(2-β-naphthylphenyl)indenyl]}zirconium dichloride;
dimethylsilanediylbis{1-[2-tert-butyl, 4-(2-β-naphthylphenyl)indenyl]}zirconium dichloride;
dimethylsilanediylbis{1-[2-phenyl, 4-(2-β-naphthylphenyl)indenyl]}zirconium dichloride;
dimethylsilanediylbis{1-[2-isopropyl, 4-(2-n-propylphenyl)indenyl]}zirconium dimethyl;
dimethylsilanediylbis{1-[2-isobutyl, 4-(2-n-propylphenyl)indenyl]}zirconium dimethyl;
dimethylsilanediylbis {1-[2-sec-butyl, 4-(2-n-propylphenyl)indenyl]}zirconium dimethyl;
dimethylsilanediylbis{1-[2-tert-butyl, 4-(2-n-propylphenyl)indenyl]}zirconium dimethyl;
dimethylsilanediylbis {1-[2-phenyl, 4-(2-n-propylphenyl)indenyl]}zirconium dimethyl;
dimethylsilanediylbis{1-[2-isopropyl, 4-(2-isopropylphenyl)indenyl]}zirconium dimethyl;
dimethylsilanediylbis{1-[2-isobutyl, 4-(2-isopropylphenyl)indenyl]}zirconium dimethyl;
dimethylsilanediylbis{1-[2-sec-butyl, 4-(2-isopropylphenyl)indenyl]}zirconium dimethyl;
dimethylsilanediylbis{1-[2-tert-butyl, 4-(2-isopropylphenyl)indenyl]}zirconium dimethyl;
dimethylsilanediylbis{1-[2-phenyl, 4-(2-isopropylphenyl)indenyl]}zirconium dimethyl;
dimethylsilanediylbis {1-[2-isopropyl, 4-(2-n-butylphenyl)indenyl]}zirconium dimethyl;
dimethylsilanediylbis {1-[2-isobutyl, 4-(2-n-butylphenyl)indenyl]}zirconium dimethyl;
dimethylsilanediylbis{1-[2-sec-butyl, 4-(2-n-butylphenyl)indenyl]}zirconium dimethyl;
dimethylsilanediylbis{1-[2-tert-butyl, 4-(2-n-butylphenyl)indenyl]}zirconium dimethyl;
dimethylsilanediylbis{1-[2-phenyl, 4-(2-n-butylphenyl)indenyl]}zirconium dimethyl;
dimethylsilanediylbis{1-[2-isopropyl, 4-(2-isobutylphenyl)indenyl]}zirconium dimethyl;
dimethylsilanediylbis{1-[2-isobutyl, 4-(2-isobutylphenyl)indenyl]}zirconium dimethyl;
dimethylsilanediylbis{1-[2-sec-butyl, 4-(2-isobutylphenyl)indenyl]}zirconium dimethyl;
dimethylsilanediylbis{1-[2-tert-butyl, 4-(2-isobutylphenyl)indenyl]}zirconium dimethyl;
dimethylsilanediylbis{1-[2-phenyl, 4-(2-isobutylphenyl)indenyl]}zirconium dimethyl;
dimethylsilanediylbis{1-[2-isopropyl, 4-(2-sec-butylphenyl)indenyl]}zirconium dimethyl;
dimethylsilanediylbis{1-[2-isobutyl, 4-(2-sec-butylphenyl)indenyl]}zirconium dimethyl;
dimethylsilanediylbis{1-[2-sec-butyl, 4-(2-sec-butylphenyl)indenyl]}zirconium dimethyl;
dimethylsilanediylbis{1-[2-tert-butyl, 4-(2-sec-butylphenyl)indenyl]}zirconium dimethyl;
dimethylsilanediylbis{1-[2-phenyl, 4-(2-sec-butylphenyl)indenyl]}zirconium dimethyl;
dimethylsilanediylbis {1-[2-isopropyl, 4-(2-tert-butylphenyl)indenyl]}zirconium dimethyl;
dimethylsilanediylbis{1-[2-isobutyl, 4-(2-tert-butylphenyl)indenyl]}zirconium dimethyl;
dimethylsilanediylbis{1-[2-sec-butyl, 4-(2-tert-butylphenyl)indenyl]}zirconium dimethyl;
dimethylsilanediylbis {1-[2-tert-butyl, 4-(2-tert-butylphenyl)indenyl]}zirconium dimethyl;
dimethylsilanediylbis{1-[2-phenyl, 4-(2-tert-butylphenyl)indenyl]}zirconium dimethyl;
dimethylsilanediylbis{1-[2-isopropyl, 4-(2-biphenyl)indenyl]}zirconium dimethyl;
dimethylsilanediylbis{1-[2-isobutyl, 4-(2-biphenyl)indenyl]}zirconium dimethyl;
dimethylsilanediylbis{1-[2-sec-butyl, 4-(2-biphenyl)indenyl]) zirconium dimethyl;
dimethylsilanediylbis{1-[2-tert-butyl, 4-(2-biphenyl)indenyl]}zirconium dimethyl;
dimethylsilanediylbis{1-[2-phenyl, 4-(2-biphenyl)indenyl]}zirconium dimethyl;
dimethylsilanediylbis{1-[2-isopropyl, 4-(2-α-naphthylphenyl)indenyl]}zirconium dimethyl;
dimethylsilanediylbis{1-[2-isobutyl, 4-(2-α-naphthylphenyl)indenyl]}zirconium dimethyl;
dimethylsilanediylbis{1-[2-sec-butyl, 4-(2-α-naphthylphenyl)indenyl]}zirconium dimethyl;
dimethylsilanediylbis {1-[2-tert-butyl, 4-(2-α-naphthylphenyl)indenyl]}zirconium dimethyl;
dimethylsilanediylbis{1-[2-phenyl, 4-(2-α-naphthylphenyl)indenyl]}zirconium dimethyl;
dimethylsilanediylbis{1-[2-isopropyl, 4-(2-β-naphthylphenyl)indenyl]}zirconium dimethyl;
dimethylsilanediylbis{1-[2-isobutyl, 4-(2-β-naphthylphenyl)indenyl]}zirconium dimethyl;
dimethylsilanediylbis{1-[2-sec-butyl, 4-(2-β-naphthylphenyl)indenyl]}zirconium dimethyl;
dimethylsilanediylbis{1-[2-tert-butyl, 4-(2-β-naphthylphenyl)indenyl]}zirconium dimethyl;
dimethylsilanediylbis {1-[2-phenyl, 4-(2-p-naphthylphenyl)indenyl]}zirconium dimethyl;
dimethylsilanediylbis{1-[2-isopropyl, 4-(2-n-propylphenyl)indenyl]}hafnium dichloride;
dimethylsilanediylbis {1-[2-isobutyl, 4-(2-n-propylphenyl)indenyl]}hafnium dichloride;
dimethylsilanediylbis{1-[2-sec-butyl, 4-(2-n-propylphenyl)indenyl]}hafnium dichloride;
dimethylsilanediylbis{1-[2-tert-butyl, 4-(2-n-propylphenyl)indenyl]}hafnium dichloride;
dimethylsilanediylbis{1-[2-phenyl, 4-(2-n-propylphenyl)indenyl]}hafnium dichloride;
dimethylsilanediylbis{1-[2-isopropyl, 4-(2-isopropylphenyl)indenyl]}hafnium dichloride;
dimethylsilanediylbis {1-[2-isobutyl, 4-(2-isopropylphenyl)indenyl]}hafnium dichloride;
dimethylsilanediylbis{1-[2-sec-butyl, 4-(2-isopropylphenyl)indenyl]}hafnium dichloride;
dimethylsilanediylbis{1-[2-tert-butyl, 4-(2-isopropylphenyl)indenyl]}hafnium dichloride;
dimethylsilanediylbis{1-[2-phenyl, 4-(2-isopropylphenyl)indenyl]}hafnium dichloride;
dimethylsilanediylbis{1-[2-isopropyl, 4-(2-n-butylphenyl)indenyl]}hafnium dichloride;
dimethylsilanediylbis{1-[2-isobutyl, 4-(2-n-butylphenyl)indenyl]}hafnium dichloride;
dimethylsilanediylbis {1-[2-sec-butyl, 4-(2-n-butylphenyl)indenyl]}hafnium dichloride;
dimethylsilanediylbis {1-[2-tert-butyl, 4-(2-n-butylphenyl)indenyl]}hafnium dichloride;
dimethylsilanediylbis{1-[2-phenyl, 4-(2-n-butylphenyl)indenyl]}hafnium dichloride;
dimethylsilanediylbis{1-[2-isopropyl, 4-(2-isobutylphenyl)indenyl]}hafnium dichloride;
dimethylsilanediylbis{1-[2-isobutyl, 4-(2-isobutylphenyl)indenyl]}hafnium dichloride;
dimethylsilanediylbis{1-[2-sec-butyl, 4-(2-isobutylphenyl)indenyl]}hafnium dichloride;
dimethylsilanediylbis {1-[2-tert-butyl, 4-(2-isobutylphenyl)indenyl]}hafnium dichloride;
dimethylsilanediylbis{1-[2-phenyl, 4-(2-isobutylphenyl)indenyl]}hafnium dichloride;
dimethylsilanediylbis{1-[2-isopropyl, 4-(2-sec-butylphenyl)indenyl]}hafnium dichloride;
dimethylsilanediylbis{1-[2-isobutyl, 4-(2-sec-butylphenyl)indenyl]}hafnium dichloride;
dimethylsilanediylbis{1-[2-sec-butyl, 4-(2-sec-butylphenyl)indenyl]}hafnium dichloride;
dimethylsilanediylbis{1-[2-tert-butyl, 4-(2-sec-butylphenyl)indenyl]}hafnium dichloride;
dimethylsilanediylbis{1-[2-phenyl, 4-(2-sec-butylphenyl)indenyl]}hafnium dichloride;
dimethylsilanediylbis{1-[2-isopropyl, 4-(2-tert-butylphenyl)indenyl]}hafnium dichloride;
dimethylsilanediylbis{1-[2-isobutyl, 4-(2-tert-butylphenyl)indenyl]}hafnium dichloride;
dimethylsilanediylbis{1-[2-sec-butyl, 4-(2-tert-butylphenyl)indenyl]}hafnium dichloride;
dimethylsilanediylbis {1-[2-tert-butyl, 4-(2-tert-butylphenyl)indenyl]}hafnium dichloride;
dimethylsilanediylbis{1-[2-phenyl, 4-(2-tert-butylphenyl)indenyl]}hafnium dichloride;
dimethylsilanediylbis{1-[2-isopropyl, 4-(2-biphenyl)indenyl]}hafnium dichloride;
dimethylsilanediylbis{1-[2-isobutyl, 4-(2-biphenyl)indenyl]}hafnium dichloride;
dimethylsilanediylbis{1-[2-sec-butyl, 4-(2-biphenyl)indenyl]}hafnium dichloride;
dimethylsilanediylbis{1-[2-tert-butyl, 4-(2-biphenyl)indenyl]}hafnium dichloride;
dimethylsilanediylbis {1-[2-phenyl, 4-(2-biphenyl)indenyl]}hafnium dichloride;
dimethylsilanediylbis{1-[2-isopropyl, 4-(2-α-naphthylphenyl)indenyl]}hafnium dichloride;
dimethylsilanediylbis{1-[2-isobutyl, 4-(2-α-naphthylphenyl)indenyl]}hafnium dichloride;
dimethylsilanediylbis{1-[2-sec-butyl, 4-(2-α-naphthylphenyl)indenyl]}hafnium dichloride;
dimethylsilanediylbis{1-[2-tert-butyl, 4-(2-α-naphthylphenyl)indenyl]}hafnium dichloride;
dimethylsilanediylbis {1-[2-phenyl, 4-(2-α-naphthylphenyl)indenyl]}hafnium dichloride;
dimethylsilanediylbis{1-[2-isopropyl, 4-(2-β-naphthylphenyl)indenyl]}hafnium dichloride;
dimethylsilanediylbis{1-[2-isobutyl, 4-(2-β-naphthylphenyl)indenyl]}hafnium dichloride;
dimethylsilanediylbis {1-[2-sec-butyl, 4-(2-β-naphthylphenyl)indenyl]}hafnium dichloride;
dimethylsilanediylbis{1-[2-tert-butyl, 4-(2-β-naphthylphenyl)indenyl]}hafnium dichloride;
dimethylsilanediylbis{1-[2-phenyl, 4-(2-β-naphthylphenyl)indenyl]}hafnium dichloride;
dimethylsilanediylbis{1-[2-isopropyl, 4-(2-n-propylphenyl)indenyl]}hafnium dimethyl;
dimethylsilanediylbis{1-[2-isobutyl, 4-(2-n-propylphenyl)indenyl]}hafnium dimethyl;
dimethylsilanediylbis {1-[2-sec-butyl, 4-(2-n-propylphenyl)indenyl]}hafnium dimethyl;
dimethylsilanediylbis{1-[2-tert-butyl, 4-(2-n-propylphenyl)indenyl]}hafnium dimethyl;
dimethylsilanediylbis {1-[2-phenyl, 4-(2-n-propylphenyl)indenyl]}hafnium dimethyl;
dimethylsilanediylbis{1-[2-isopropyl, 4-(2-isopropylphenyl)indenyl]}hafnium dimethyl;
dimethylsilanediylbis{1-[2-isobutyl, 4-(2-isopropylphenyl)indenyl]}hafnium dimethyl;
dimethylsilanediylbis{1-[2-sec-butyl, 4-(2-isopropylphenyl)indenyl]}hafnium dimethyl;
dimethylsilanediylbis{1-[2-tert-butyl, 4-(2-isopropylphenyl)indenyl]}hafnium dimethyl;
dimethylsilanediylbis{1-[2-phenyl, 4-(2-isopropylphenyl)indenyl]}hafnium dimethyl;
dimethylsilanediylbis{1-[2-isopropyl, 4-(2-n-butylphenyl)indenyl]}hafnium dimethyl;
dimethylsilanediylbis{1-[2-isobutyl, 4-(2-n-butylphenyl)indenyl]}hafnium dimethyl;
dimethylsilanediylbis {1-[2-sec-butyl, 4-(2-n-butylphenyl)indenyl]}hafnium dimethyl;
dimethylsilanediylbis{1-[2-tert-butyl, 4-(2-n-butylphenyl)indenyl]}hafnium dimethyl;
dimethylsilanediylbis{1-[2-phenyl, 4-(2-n-butylphenyl)indenyl]}hafnium dimethyl;
dimethylsilanediylbis{1-[2-isopropyl, 4-(2-isobutylphenyl)indenyl]}hafnium dimethyl;
dimethylsilanediylbis{1-[2-isobutyl, 4-(2-isobutylphenyl)indenyl]}hafnium dimethyl;
dimethylsilanediylbis {1-[2-sec-butyl, 4-(2-isobutylphenyl)indenyl]}hafnium dimethyl;
dimethylsilanediylbis{1-[2-tert-butyl, 4-(2-isobutylphenyl)indenyl]}hafnium dimethyl;
dimethylsilanediylbis{1-[2-phenyl, 4-(2-isobutylphenyl)indenyl]}hafnium dimethyl;
dimethylsilanediylbis{1-[2-isopropyl, 4-(2-sec-butylphenyl)indenyl]}hafnium dimethyl;
dimethylsilanediylbis{1-[2-isobutyl, 4-(2-sec-butylphenyl)indenyl]}hafnium dimethyl;
dimethylsilanediylbis{1-[2-sec-butyl, 4-(2-sec-butylphenyl)indenyl]}hafnium dimethyl;
dimethylsilanediylbis {1-[2-tert-butyl, 4-(2-sec-butylphenyl)indenyl]}hafnium dimethyl;
dimethylsilanediylbis{1-[2-phenyl, 4-(2-sec-butylphenyl)indenyl]}hafnium dimethyl;
dimethylsilanediylbis{1-[2-isopropyl, 4-(2-tert-butylphenyl)indenyl]}hafnium dimethyl;
dimethylsilanediylbis{1-[2-isobutyl, 4-(2-tert-butylphenyl)indenyl]}hafnium dimethyl;
dimethylsilanediylbis{1-[2-sec-butyl, 4-(2-tert-butylphenyl)indenyl]}hafnium dimethyl;
dimethylsilanediylbis{1-[2-tert-butyl, 4-(2-tert-butylphenyl)indenyl]}hafnium dimethyl;
dimethylsilanediylbis{1-[2-phenyl, 4-(2-tert-butylphenyl)indenyl]}hafnium dimethyl;
dimethylsilanediylbis{1-[2-isopropyl, 4-(2-biphenyl)indenyl]}hafnium dimethyl;
dimethylsilanediylbis {1-[2-isobutyl, 4-(2-biphenyl)indenyl]}hafnium dimethyl;
dimethylsilanediylbis{1-[2-sec-butyl, 4-(2-biphenyl)indenyl]}hafnium dimethyl;
dimethylsilanediylbis{1-[2-tert-butyl, 4-(2-biphenyl)indenyl]}hafnium dimethyl;
dimethylsilanediylbis{1-[2-phenyl, 4-(2-biphenyl)indenyl]}hafnium dimethyl;
dimethylsilanediylbis{1-[2-isopropyl, 4-(2-α-naphthylphenyl)indenyl]}hafnium dimethyl;
dimethylsilanediylbis{1-[2-isobutyl, 4-(2-α-naphthylphenyl)indenyl]}hafnium dimethyl;
dimethylsilanediylbis{1-[2-sec-butyl, 4-(2-α-naphthylphenyl)indenyl]}hafnium dimethyl;
dimethylsilanediylbis {1-[2-tert-butyl, 4-(2-α-naphthylphenyl)indenyl]}hafnium dimethyl;
dimethylsilanediylbis {1-[2-phenyl, 4-(2-α-naphthylphenyl)indenyl]}hafnium dimethyl;
dimethylsilanediylbis{1-[2-isopropyl, 4-(2-β-naphthylphenyl)indenyl]}hafnium dimethyl;
dimethylsilanediylbis {1-[2-isobutyl, 4-(2-β-naphthylphenyl)indenyl]}hafnium dimethyl;
dimethylsilanediylbis{1-[2-sec-butyl, 4-(2-β-naphthylphenyl)indenyl]}hafnium dimethyl;
dimethylsilanediylbis{1-[2-tert-butyl, 4-(2-β-naphthylphenyl)indenyl]}hafnium dimethyl;
dimethylsilanediylbis {1-[2-phenyl, 4-(2-β-naphthylphenyl)indenyl]}hafnium dimethyl;

The metallocenes of this invention are prepared according to general techniques known from the literature, for example U.S. Patent Nos. 5,789,634 and 5,840,644.

Generally, metallocenes of this type are synthesized as shown below (for R⁴=H) where (a) is an aryl-coupling reaction between a 4-halosubstituted indene and an aryl Grignard reagent catalyzed by NiCl₂(PPh₃)₂ in ether-type solvents at room temperature to reflux. Product is usually purified by column chromatography or distillation. (b) is a deprotonation via a metal salt of an alkyl anion (e.g. n-BuLi) to form an indenide followed by reaction with an appropriate bridging precursor (e.g. Me₂SiCl₂). Reactions are usually done in ether-type solvents at ambient temperatures. The final product is purified by column chromatography or distillation; and (c) is double deprotonation via an alkyl anion (e.g. n-BuLi) to form a dianion followed by reaction with a metal halide (e.g. ZrCl₄).The reactions are usually done in ether-type or aromatic solvents at ambient temperatures. The final products are obtained by recrystallization of the crude solids. 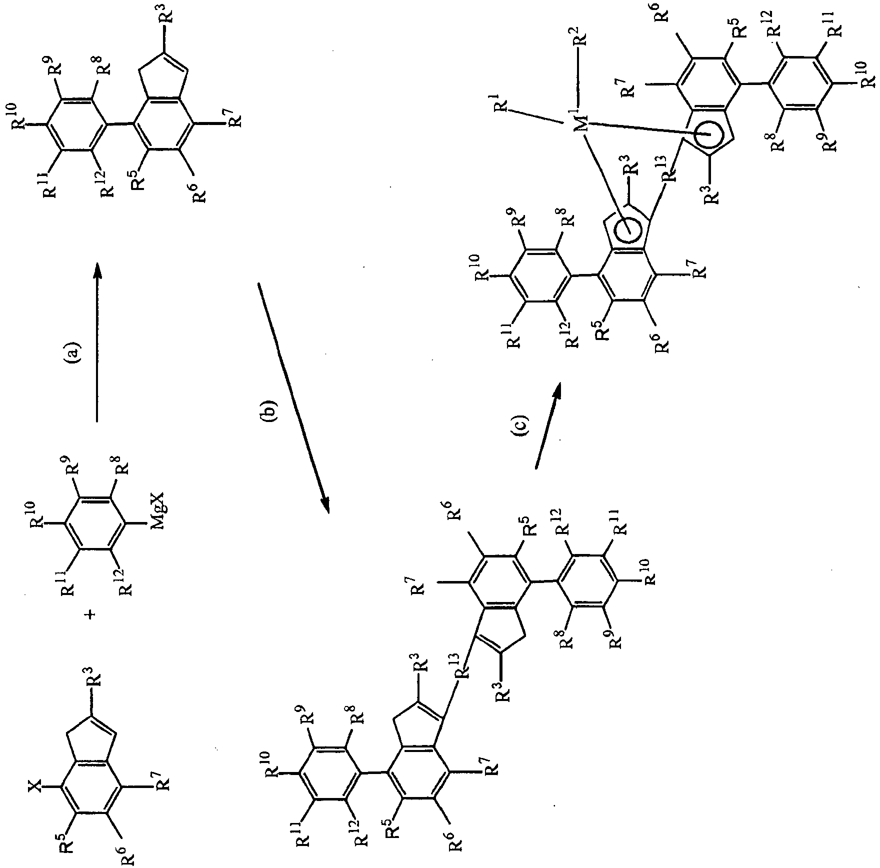 The metallocenes of this invention are highly active catalyst components for the polymerization of olefins. They can form different stereoisomers and are preferably employed as chiral racemates. However, it is also possible to use the individual enantiomers in the (+) or (-) form. The individual stereoisomers allow an optically active polymer to be prepared. In some cases it may be desirable to remove the meso form of the metallocenes, since the polymerization-active center (the metal atom) in these compounds is no longer chiral due to the mirror symmetry at the central metal atom and it is, therefore, not possible to produce a highly isotactic polymer. If the meso form is not removed, atactic polymer is formed in addition to isotactic polymer. For certain applications (e.g., if a random copolymer of propylene and ethylene and/or any other monoolefin and/or diene is to be made) this may be entirely desirable. Accordingly, racemic metallocenes contaminated with not more than about 5 %, preferably not more than about 2 %, and even more preferred not more than about 1%, of the meso form represent a particularly preferred embodiment of the metallocenes of the present invention. In another preferred embodiment, the meso form of a metallocene of the present invention is contaminated with not more than about 5 %, preferably not more than about 2 %, and even more preferred not more than about 1%, of the racemic form.

Rac/meso metallocene isomer separation is facilitated when metallocenes containing certain bridging groups are prepared.

Metallocenes are generally used in combination with some form of activator in order to create an active catalyst system. The terms "activator" and "cocatalyst" are used interchangeably and are defined herein to mean any compound or component, or combination of compounds or components, capable of enhancing the ability of one or more metallocenes to polymerize olefins.

Alkylalumoxanes such as methylalumoxane (MAO) are commonly used as metallocene activators. The alumoxanes which may be employed according to the present invention are not particularly limited. They include oligomeric linear and/or cyclic alkylalumoxanes of the general formula R-(Al(R)-O)ₙ-AlR₂ for oligomeric, linear alumoxanes and (-Al(R)-O-)ₘ for oligomeric cyclic alumoxanes wherein n usually is 1-40, preferably 10-20, m usually is 3-40, preferably 3-20, and R usually is a C₁-C₈ alkyl group (e.g., methyl, ethyl, n-propyl, isopropyl, n-butyl and isobutyl), and preferably methyl to provide methylalumoxane (MAO). MAO is a mixture of oligomers with a very wide distribution of molecular weights and usually with an average molecular weight of about 1200. MAO is typically kept in solution in toluene. It is also possible to use, for the present purpose, alumoxanes of the type just described wherein the alkyl groups in the above general formulae are different. A preferred example thereof is modified methylalumoxane (MMAO) wherein in comparison to MAO a part of the methyl groups is replaced by other alkyl groups. Alumoxane solutions, particularly methylalumoxane solutions, may be obtained from commercial vendors as solutions having various concentrations. There are a variety of methods for preparing alumoxane, non-limiting examples of which are described in U.S. Patent Nos. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,103,031, 6,001,766 and EP-A-0 561 476, EP-B1-0 279 586, EP-A-0 594-218 and WO 94/10180.

Generally the atomic ratio of Al in the alumoxane to metal in the metallocene compound is at least about 10 : 1, more preferably at least about 50 : 1, and most preferred at least about 80 : 1. On the other hand said ratio is generally not higher than about 1,000 : 1, particularly not higher than about 500 : 1, with a ratio of not higher than about 300 : 1 being particularly preferred.

Ionizing activators may also be used to activate metallocenes. These activators are neutral or ionic, or are compounds such as tri(n-butyl)ammonium tetrakis(pentafluorophenyl)borate, which ionize the neutral metallocene compound. Unlike alumoxane cocatalysts, these ionizing activators can usually be employed in a molar ratio with respect to the metallocene which is much closer to 1:1 (e.g., less than 5:1, less than 2:1, and preferably about 1:1). Such ionizing compounds may contain an active proton, or some other cation associated with, but not coordinated or only loosely coordinated to, the remaining ion of the ionizing compound. Combinations of activators may also be used, for example, alumoxane and ionizing activator combination, see for example, WO 94/07928.

Descriptions of ionic catalysts for coordination polymerization comprised of metallocene cations activated by noncoordinating anions appear in the early work in EP-A-0 277 003, EP-A-0 277 004 and U.S. Patent No. 5,198,401 and WO-A-92/00333. These teach desirable methods of preparation wherein metallocenes are protonated by an anion precursor such that an alkyl/hydride group is abstracted from a transition metal to make it both cationic and charge-balanced by the non-coordinating anion. Suitable ionic salts include tetrakis-substituted borate or aluminum salts having fluorinated aryl-constituents such as phenyl, biphenyl and naphthyl.

The term "noncoordinating anion" (NCA) means an anion which either does not coordinate to said cation or which is only weakly coordinated to said cation thereby remaining sufficiently labile to be displaced by a neutral Lewis base. "Compatible" non-coordinating anions are those which are not degraded to neutrality when the initially formed complex decomposes. Further, the anion will not transfer an anionic substituent or fragment to the cation so as to cause it to form a neutral four coordinate metallocene compound and a neutral by-product from the anion. Non-coordinating anions useful in accordance with this invention are those which are compatible, stabilize the metallocene cation in the sense of balancing its ionic charge at +1, yet retain sufficient lability to permit displacement by an ethylenically or acetylenically unsaturated monomer during polymerization.

The use of ionizing ionic compounds not containing an active proton but capable of producing both the active metallocene cation and a non-coordinating anion is also known. See, for example, EP-A-0 426 637 and EP-A- 0 573 403. An additional method of making the ionic catalysts uses ionizing anion precursors which are initially neutral Lewis acids but form the cation and anion upon ionizing reaction with the metallocene compounds, for example the use of tris(pentafluorophenyl)borane. See EP-A-0 520732 . Ionic catalysts for addition polymerization can also be prepared by oxidation of the metal centers of transition metal compounds by anion precursors containing metallic oxidizing groups along with the anion groups, see EP-A-0 495 375.

Where the metal ligands include halogen moieties (for example, chloride) which are not capable of ionizing abstraction under standard conditions, they can be converted via known alkylation reactions with organometallic compounds such as lithium or aluminum hydrides or alkyls, alkylalumoxanes, Grignard reagents, etc. See EP-A-0 500 944 and EP-A1-0 570 982 for *in situ* processes describing the reaction of alkyl aluminum compounds with dihalo-substituted metallocene compounds prior to or with the addition of activating anionic compounds.

Methods for supporting ionic catalysts comprising metallocene cations and NCAs are described in WO 9950311, U.S. Patent Nos. 5,643,847 and 5,972,823, U.S. Patent Application No. 09/184358, filed November 2, 1998 and U.S. Patent Application No. 09/184389, filed November 2, 1998.

When the activator for the metallocene supported catalyst composition is a NCA, preferably the NCA is first added to the support composition followed by the addition of the metallocene catalyst. When the activator is MAO, preferably the MAO and metallocene catalyst are dissolved together in solution. The support is then contacted with the MAO/metallocene catalyst solution. Other methods and orders of addition will be apparent to those skilled in the art.

The catalyst compositions of this invention preferably comprise a support. Suitable supports include porous particulate materials, such as for example, talc, inorganic oxides, inorganic chlorides such as magnesium chloride, and resinous materials such as polyolefins or other polymers.

Preferably, the support materials are porous inorganic oxide materials, which include those from the Periodic Table of Elements of Groups 2, 3, 4, 5, 13 or 14 metal/metalloid oxides. Silica, alumina, silica-alumina, and mixtures thereof are particularly preferable. Other inorganic oxides that may be employed either alone or in combination with the silica, alumina or silica-alumina are magnesia, titania, zirconia, and the like.

In one preferred embodiment the support material is porous silica, more preferably porous silica which has a surface area in the range of not less than 10, preferably not less than 50, and most preferred not less than 100 m²/g, but usually not more than 700, preferably not more than 500, and most preferred not more than 400 m²/g. The total pore volume thereof usually is not less than 0.1, preferably not less than 0.5, and most preferred not less than 0.8 cc/g, whereas the pore volume generally is not higher than 4.0, preferably not higher than 3.5, most preferred not higher than 3.0 cc/g. The average particle size of the porous silica should be at least 10, preferably at least 20, and most preferred at least 30 µm, the maximum value thereof usually being not higher than 500, preferably not higher than 200, and most preferred not higher than 100 µm. The average pore size of typical porous support materials usually is at least 10, preferably at least 50, and even more preferably at least 75 Å. Average pore sizes should generally not be higher than 1000, preferably not higher than 500, and most preferred not higher than 350 Å. It may be particularly desirable to dehydrate the silica at a temperature of from 100°C to 800°C anywhere from 3 to 24 hours.

The metallocene, activator and support material may be combined in any number of ways. More than one metallocene may also be used. Examples of suitable support techniques are described in U. S. Patent Nos. 4,808,561 and 4,701,432. Preferably metallocene and activator are combined and their contact product is supported on the porous support material as described in U. S. Patent No. 5,240,894 and WO 94/28034, WO 96/00243, and WO 96/00245. Alternatively, the metallocenes may be preactivated separately and then combined with the support material either separately or together. If the metallocenes are separately supported, then preferably, they are dried and then combined as a powder before use in polymerization.

Regardless of whether the metallocene(s) and their activator are separately precontacted or whether the metallocene(s) and activator are combined at once, in some instances it may be preferred that the total volume of reaction solution applied to the porous support is less than 4 times the total pore volume of the porous support, more preferably less than 3 times the total pore volume of the porous support and even more preferably in the range of from more than 1 to less than 2.5 times the total pore volume of the porous support. Procedures for measuring the total pore volume of porous support are well known in the art. One such method is described in Volume 1, Experimental Methods in Catalyst Research, Academic Press, 1968, pages 67-96.

The supported catalyst system may be used directly in polymerization or the catalyst system may be prepolymerized using methods well known in the art. For details regarding prepolymerization, see U. S. Patent Nos. 4,923,833 and 4,921,825, and EP 0 279 863 and EP 0 354 893.

The metallocene catalyst systems described herein are useful in the polymerization of all types of olefins. This includes polymerization processes which produce homopolymers, copolymers, terpolymers and the like as well as block copolymers and impact copolymers. These polymerization processes may be carried out in solution, in suspension or in the gas phase, continuously or batchwise, or any combination thereof, in one or more steps, usually at a temperature not lower than 30, preferably not lower than 50, most preferred not lower than 80° C, and not higher than 200, preferably not higher than 120, most preferred not higher than 100°C. Preferably, the polymerization or copolymerization is carried out using olefins of the formula R^{a}-CH=CH-R^{b}. In this formula, R^{a} and R^{b} are identical or different and are a hydrogen atom or an alkyl or alkenyl radical having 1 to 14 carbon atoms. Alternatively, R^{a} and R^{b} may form a ring together with the carbon atoms connecting them. Examples of such olefins are ethylene, propylene, 1-butene, 1-hexene, 4-methyl-1-pentene, and 1-octene, vinylcyclohexane, norbornene and norbomadiene. In particular, propylene and ethylene are polymerized. The metallocenes and metallocenes catalyst systems of this invention are most suitable for the polymerization of propylene based polymers.

If necessary, hydrogen is added as a molecular-weight regulator and/or in order to increase the activity. The overall pressure in the polymerization system usually is at least about 0.5 bar, preferably at least about 2 bar, most preferred at least about 5 bar. Pressures higher than about 100, e.g., higher than about 80 bar and, in particular, higher than about 64 bar are usually not preferred.

Typically, the metallocene is used in the polymerization in a concentration, based on the transition metal, of not less 10⁻⁴, preferably not less than 10⁻³ mol, and not higher than 10⁷, preferably not higher than 10⁴ mol, of transition metal per dm³ of solvent or per dm³ of reactor volume. When alumoxane is used as the cocatalyst, it is used in a concentration of usually not less than 10⁻⁴ ,preferably not less than 10⁻⁵ mol, and not higher than 10⁻¹, preferably not higher than 10⁻² mol, per dm³ of solvent or per dm³ of reactor volume. The other cocatalysts mentioned are used in an approximately equimolar amount (e.g., from about 1.2 : 1 to about 1 : 1.2) with respect to the metallocene. In principle, however, higher concentrations are also possible.

If the polymerization is carried out as a suspension or solution polymerization, an inert solvent which is customary for the Ziegler low-pressure process is typically used for example, the polymerization is carried out in an aliphatic or cycloaliphatic hydrocarbon; examples of which are propane, butane, hexane, heptane, isooctane, cyclohexane and methylcyclohexane. It is also possible to use mineral spirit or a hydrogenated diesel oil fraction. Toluene can also be used. The polymerization is preferably carried out in the liquid monomer(s). If inert solvents are used, the monomer(s) is (are) metered in gas or liquid form.

Before addition of the catalyst, in particular of the supported catalyst system, another alkylaluminum compound, such as, for example, trimethylaluminum, triethylaluminum, triisobutylaluminum, trioctylaluminum or isoprenylaluminum, may additionally be introduced into the reactor in order to render the polymerization system inert (for example to remove catalyst poisons present in the olefin). This compound is added to the polymerization system in a concentration of from 100 to 0.01 mmol of Al per kg of reactor contents. Preference is given to triisobutylaluminum and triethylaluminum in a concentration of from 10 to 0.1 mmol of Al per kg of reactor contents. This allows the molar Al/M¹ ratio to be selected at a low level in the synthesis of a supported catalyst system.

In principle, however, the use of further substances for catalysis of the polymerization reaction is unnecessary, i.e., the systems according to the invention can be used as the only catalysts for the polymerization of olefins.

The process according to the invention is distinguished by the fact that the metallocenes described can give propylene polymers of very high molecular weight, melting point, and very high stereotacticity, with high catalyst activities in, e.g., the temperature range from about 40°C to about 100°C, such as the industrially particularly interesting polymerization temperature range of from about 50°C to about 80°C.

The catalyst systems of this invention are capable of providing polymers, particularly propylene homopolymers and copolymers, of exceptionally high molecular weight and melting point even when used in processes under commercially relevant conditions of temperature, pressure and catalyst activity. Preferred melting points of olefin polymers comprising at least about 99 % by weight, preferably are at least about 99.3 % by weight and most preferred at least 99.5 % by weight of units derived from propylene (the remainder being preferably derived from one or more compounds selected from ethylene and 1-olefins comprising 4 to 12 carbon atoms, most preferred ethylene) are as high as 155°C, e.g., as high as 156°C, more preferably at least 157°C, even more preferably at least 158°C, and may be as high as 160°C or even higher (these melting points being determined by DSC according to the procedure described in the Examples below).

With respect to molecular weights, copolymers made with the catalyst systems of the present invention such as, e.g., ethylene/propylene rubbers (EPR's) or ethylene/propylene/diene copolymers (EPDM's), usually have an intrinsic viscosity, measured in decalin at 135° C, of usually at least about 1.8, preferably at least about 2.0, and more preferred at least about 2.1 (e.g., at least about 2.2). This enables the production of very satisfactory impact copolymers (ICP's), such as *in situ* blends of propylene homopolymer or copolymer as discussed above of high melting point (and preferably also high molecular weight) and propylene copolymers (such as EPR's and/or EPDM's) of high intrinsic viscosity with a single catalyst system (and, preferably, in a single reactor). For this purpose, the copolymers generally will have an ethylene content of at least about 30, preferably at least about 35, more preferred at least about 40 weight % and not more than about 60, preferably not more than about 50 weight %. The ethylene content of the ICP's usually will be at least about 1.5, preferably at least about 3 weight percent and up to about 20, preferably up to about 15, weight %.

The homo- and copolymers made with the catalyst systems of the present invention (e.g., those containing units derived from propylene, or from propylene and ethylene) also have a narrow molecular weight distribution, M_{w}/Mₙ, usually of not higher than about 3.5, preferably not higher than about 3.0, more preferred not higher than about 2.5 and sometimes even not higher than about 2.2. They also are distinguished by low xylene and n-hexane extractables contents. Often the xylene extractables and/or the n-hexane extractables of these homo- and copolymers will amount to less than about 2.0, preferably less than about 1.5, even more preferred less than about 1.0 weight %. A general description of the procedure for measuring the xylene extractables (solubles) is found in J. C. Randall, J. Poly. Sci.: Part A Polymer Chemistry, Vol. 36, 1527-1542 (1998). Hexane extractions are performed by weighing the polymer sample in a dried soxhlet thimble. Hexane is heated to reflux through the thimble in the soxhlet apparatus. When the extraction is complete the solvent is evaporated, and the sample dried under the appropriate vacuum. The amount of extractables is determined by weight.The thimble containing the insoluble polymer is dried in a vacuum oven and the weight of the recovered polymer is determined.

The polymer compositions of the present invention are also characterized by a relatively narrow molecular weight distribution. Their values of M_{w}/Mₙ (as determined by Gel Permeation Chromatography using polystyrene standards, see Examples below) usually are not higher than about 3.5, often not higher than about 3.0, e.g., not higher than about 2.7.

Catalyst systems of this invention are capable of providing propylene polymers having high stereospecificity and regiospecificity. Isotactic propylene polymers prepared according to the processes of this invention may have a proportion of 2,1-inserted propene units of less than about 0.5%, at a triad tacticity of greater than about 98% (see, for example, the results summarized in Table 2C, below). Preferably, there is no measurable proportion of 2,1-inserted propene units. Triad tacticity is determined using ¹³C-NMR according to J.C. Randall, Polymer Sequence Determination: Carbon-13 NMR Method, Academic Press New York 1978, incorporated herein by reference in its entirety.

Polymers prepared using the processes described herein find uses in all applications including fibers, injection-molded parts, films, pipes, and wire and cable applications. Non-limiting examples include carpet fibers and primary and secondary carpet backing; slit tape applications such as tarpaulins, erosion abatement screens, sand bags, fertilizer and feed bags, swimming pool covers, intermediate bulk container (IBC) bags; non-woven applications for spunbonded, melt blown and thermobonded carded web applications such as disposable diaper liners, feminine hygiene products, tarpaulins and tent fabrics, and hospital garments; apparel applications such as socks, T-shirts, undergarments, bicycle shorts, sweat bands, football undershirts, hiking socks and other outdoor sporting apparel; cordage applications such as mooring and towing lines and rope applications; netting applications such as safety fences, geogrids for soil stabilization; injection molded applications such as appliance parts in automatic dishwashers and clothes washers, hand tools and kitchen appliances; consumer product applications such as outdoor furniture, luggage, infant car seats, ice coolers, yard equipment; medical applications such as disposable syringes and other hospital and laboratory devices; rigid packaging made by injection molding, blow molding or thermoforming such as margarine tubs, yogurt containers and closures, commercial bottles and ready-to-eat food containers; transportation applications such as automotive interior trim, instrument panels, bumper fascia, grills and external trim parts, battery cases; film applications such as snack packages and other food packaging and film labels, packing tapes and pressure sensitive labels; wire and cable applications such as wire insulation.

While the present invention has been described and illustrated by reference to particular embodiments, it will be appreciated by those of ordinary skill in the art, that the invention lends itself to many different variations not illustrated herein. For these reasons, then, reference should be made solely to the appended claims for purposes of determining the true scope of the present invention.

### EXAMPLES

All air sensitive experiments were carried out in nitrogen purged dry boxes. All solvents were purchased from commercial sources. Aluminum alkyls were purchased as hydrocarbon solutions from commercial sources. The commercial methylalumoxane ("MAO") was purchased from Albemarle as a 30 wt % solution in toluene.

### EXAMPLE 1

### Supported Metallocene Catalyst System 1

In a 10-ml vial 2.71 g (0.535 mmol) of an 11.05 wt% solution of tris-(perfluorophenyl)borane in toluene was massed. 0.10 g (0.615 mmol) of N,N-dimethylaniline (Aldrich, 98+%) was added followed by 5.0 g of toluene. A pink solution resulted. This solution was pipetted into a 250 ml round bottom flask containing 5.0 g of silica (Grace Davison, calcined at 500°C with 3-wt% (NH₄)₂SiF₆) and a magnetic stir bar. 10g of toluene was used to rinse the vial, pipette, and the sides of the flask. The flask was heated to 50 °C in an oil bath. The mixture was stirred for 38 minutes. 0.057 g (0.065 mmol) of dimethylsilanediylbis {1-[2-isopropyl,4-(2-biphenylyl)indenyl]} zirconium dimethyl was added to the flask as a solid to produce a brown slurry. Stirring was continued for 35 minutes at 50 °C. After this time, the stirring and heating were discontinued. The solvent was stripped in vacuo to give 5.25 g. Composition by mass balance: Zirconium: 0.012 mmol/g catalyst, Boron: 0.12 mmol/g catalyst.

### EXAMPLE 2

### Supported Metallocene Catalyst System 2

In a 100 mL round bottom flask dimethylsilanediyl{1-[2-isopropyl-4-(2-biphenylyl)indenyl]}zirconium dichloride (0.074 g) was added to the above MAO-toluene solution (6.74 g, 7.2 mL) and stirred twenty minutes. The resultant mixture was filtered through a medium glass frit funnel and washed with toluene (14 mL). To the combined filtrates was added dehydrated silica (4.0 g, Davison 948 Regular, 600°C dehydration). This slurry was stirred for twenty minutes, then dried at 40 °C for two minutes under vacuum on a rotary evaporator until the liquid evaporated and then the solid was further dried a total of about 2 hours and thirty one minutes. The supported catalyst was recovered as a light reddish purple, free flowing solid (5.28 g).

### EXAMPLE 3

### 2-Isopropyl, 4-(2-biphenylyl)-indene

Magnesium (2.0 g, 83 mmol) and 2-bromobiphenyl (10 g, 43 mmol) were added together in 100 mL of diethyl ether and allowed to stir overnight at reflux to form a Grignard solution. 4-Chloro-2-isopropylindene (7.5 g, 434 mmol) and NiCl₂(PPh₃)₂ (1.5 g, 2.3 mmol) were dissolved in 150 mL of Et₂O. The Grignard solution was added and the reaction was stirred overnight at reflux. After overnight stirring, the reaction was slowly quenched with H₂O to neutralize unreacted Grignard. The solution was subsequently treated with 100 mL of 10% HCl(aq), and neutralized with saturated sodium bicarbonate aqueous solution. The organic layer was dried with magnesium sulfate and the solvent was removed by rotary evaporation. The remaining residue was loaded onto a silica gel column and eluted with hexane. Yield was 8.1 g (61%).

### Lithium {1-[2-isopropyl, 4-(2-biphenylyl)indenide]}

2-Isopropyl, 4-(2-biphenylyl)-indene (4.0 g, 13 mmol) was dissolved in 100 mL of pentane. To this solution was added 5.2 mL of n-BuLi (2.5M in hexane) and the reaction was allowed to stir 4 hours at room temperature. A white solid precipitated from solution and was collected by frit filtration and washed with additional pentane. Yield: 2.7 g (67%).

### Dimethylsilanediylbis{1-[2-isopropyl, 4-(2-biphenylyl)indene]}

Me₂SiCl₂ (0.55 g, 4.3 mmol) was dissolved in 60 mL of diethyl ether. While stirring, lithium{1-[2-isopropyl, 4-(2-biphenylyl)indenide]} (2.7 g, 8.6 mmol) was added as a dry powder and a few drops of THF were added to catalyze the reaction. The contents were allowed to stir overnight at room temperature. The solvent was removed in vacuo and the residue was taken up in pentane and filtered to remove LiCl salts. The pentane was removed in vacuo to yield a flaky white solid. Yield: 2.1g (72%).

### Dimethylsilanediylbis{1-[2-isopropyl, 4-(2biphenylyl)indenyl]}zirconium dichloride

Dimethylsilanediylbis {1-[2-isopropyl, 4-(2-biphenylyl)indene]} (2.1 g, 3.1 mmol) was dissolved in 60 mL of Et₂O. While stirring, 2.5 mL of n-BuLi (2.5M in hexane) was added and allowed to stir at room temperature for 0.5 hours. After this time, the solution was cooled to -35°C and ZrCl₄ (0.73 g, 3.1 mmol) was added and allowed to stir at room temperature for 3 hours. The solvent was then removed in vacuo and the residue was taken up in a mixture of methylene chloride and pentane and filtered to remove LiCl salts. The filtrate was then concentrated and chilled to -35 °C to induce crystallization. 0.29 g (11%) of pure racemic isomer was isolated.

### Dimethylsilanediylbis{1-[2-isopropyl, 4-(2-biphenylyl)indenyl]}zirconium dimethyl

Dimethylsilanediylbis{1-[2-isopropyl, 4-(2-biphenylyl)indenyl]}zirconium dichloride (0.4 g, 490 µmol) was dissolved in 50 mL of toluene. To this solution was added 1.8 mL of MeMgBr (3.0M in Et₂O and the reaction was stirred at 90°C for 5 hours. After this time, the reaction was cooled to room temperature and 10 mL each of SiCl₄ and 1,4-dioxane was added. The solution was filtered through celite and the solvent was removed in vacuo. The resulting solids were washed with pentane. Yield: 0.18g(44%).

### Supported Metallocene Catalyst System 3

In a 100 mL round bottom flask dimethylsilanediylbis{1-[2-isopropyl, 4-(2-biphenylyl)indenyl]} zirconium dimethyl (0.070 g) was added to the above MAO-toluene solution (6.74 g, 7.2 mL) and stirred twenty minutes. The resultant mixture was filtered through a medium glass frit funnel and washed with toluene (14 mL). To the combined filtrates was added dehydrated silica (4.0 g, Davison 948 Regular, 600°C dehydration). This slurry was stirred for twenty minutes, then dried at 40 °C for two minutes under vacuum on a rotary evaporator until the liquid evaporated and then the solid was further dried a total of about 2 hours and thirty four minutes. The supported catalyst was recovered as a light purple, free flowing solid (5.56 g).

### POLYMERIZATIONS

### Isotactic Polypropylene Homopolymer

The polymerization procedure for producing homopolymers with the above supported metallocene catalyst systems was as follows. In a clean, dry two liter autoclave which had been flushed with propylene vapor, TEAL (triethyl aluminum) scavenger (0.3 mL, 1.5M) was added. Hydrogen gas was added at this point. The reactor was closed and filled with 800 mL of liquid propylene. After heating the reactor to 70 °C , the catalyst was added by washing in with propylene (200 mL). After the indicated time, typically one hour, the reactor was cooled, and the excess propylene vented. The polymer was removed and dried.

### Isotactic Polypropylene Random Copolymer (RCP)

The polymerization procedure for producing ethylene random copolymers (RCP) with the above supported metallocene catalyst systems was as follows. In a clean, dry two liter autoclave which had been flushed with propylene vapor, TEAL scavenger (0.3 mL, 1.5M) was added. Hydrogen gas was added at this point, if used. The reactor was closed and filled with 800 mL of liquid propylene. After heating the reactor to 60 °C , an overpressure of ethylene, as indicated by the "delta kPa", was slowly added while maintaining 60°C. The ethylene inlet was closed while the catalyst was added by washing in with propylene (200 mL). Immediately after addition the ethylene inlet was reopened and the desired overpressure of ethylene was maintained. After the indicated time, typically one hour, the reactor was cooled, and the excess propylene vented. The polymer was removed and dried.

### Impact Copolymers (ICP)

The polymerization procedure for producing ICP with the above supported metallocene catalyst systems was as follows. In a clean, dry two liter autoclave which had been flushed with propylene vapor, TEAL scavenger (0.3 mL, 1.5M) was added. Hydrogen gas was added at this point. The reactor was closed and filled with 800 mL liquid propylene. After heating the reactor to 70 °C, the catalyst was added by washing in with propylene (200 mL). After the indicated time, typically one hour, the reactor was vented to about 170 psig (1172 kPa) pressure and then an ethylene/propylene gas mixture was passed through the reactor at the rates indicated while maintaining 200 psig (1379 kPa). At the end of the gas phase stage, typically 90 to 150 minutes, the reactor was vented and cooled under N₂. The granular ICP polymer was removed and dried.

### POLYMER ANALYSIS

Results are shown in Tables 1-3 (A and B) below. The numbering of the Tables corresponds to the numbering of the above Examples (Supported Metallocene Catalyst Systems). Molecular weight determinations were made by gel permeation chromatography (GPC) according to the following technique. Molecular weights and molecular weight distributions were measured using a Waters 150°C gel permeation chromatograph equipped with Shodex (Showa Denko) AT-80 M/S columns and a differential refractive index (DRI) detector operating at 145°C with 1,2,4-trichlorobenzene as the mobile phase at a 1.0 mL/min. flow rate. The sample injection volume was 300 microliters. The columns were calibrated using narrow polystyrene standards to generate a universal calibration curve. The polypropylene calibration curve was established using k = 8.33 X 10⁻⁵ and a = 0.800 as the Mark-Houwink coefficients. The numerical analyses were performed using Waters "Millennium" software.

DSC melting points were determined on commercial DSC instruments and were reported as the second melting point. The polymer sample was heated to 230.0°C for ten minutes and then cooled from 230°C to 50°C at 10°C/minute. The sample was held at 50°C for five minutes. The second melt was then recorded as the sample was heated from 50°C to 200°C at a rate of 10°C/minute. The peak temperature was recorded as the second melting point.

The results summarized in Table 2C were obtained by following the procedures described in J.C. Randall, Polymer Sequence Determination: Carbon-13 NMR Method, Academic Press New York 1978, supra.

### ICP POLYMER EXTRACTION METHOD

The ICP polymer was dissolved in hot xylene and then allowed to cool overnight. After filtration the insolubles were dried. The xylene soluble portion was evaporated and the soluble material recovered. The IV (intrinsic viscosity) of the recovered soluble material was measured in decalin at 135°C by using known methods and instruments such as a Schott A VSPro Viscosity Automatic Sampler.

At very high ICP MFR this method can extract some low molecular weight isotactic PP and thus lower the observed IV.

### ICP POLYMER FRACTIONATION METHOD

The ICP samples were sent to Polyhedron Laboratories, Inc. to be fractionated and analyzed by GPC. A general description of the procedure is found in J. C. Randall, J. Poly. Sci.: Part A Polymer Chemistry, Vol. 36, 1527-1542 (1998), supra.

**TABLE 1A**

| **Dimethylsilanediylbis{1-[2-isopropyl,4-(2-biphenylyl)indenyl**]**}zirconium dimethyl/NCA** | | | | | | | | |
|---|---|---|---|---|---|---|---|---|
| RUN # | TEMP (°C) | Cat. Amount (mg) | Yield (g) | Efficiency (Kg/g cat) | C₂= (delta kPa) | H₂ (mmole) | Time split (min.) | C₂=/C₃= flow rates (l/min.) |
| 179 | 60 | 45 | <0.5 | <0.01 | 0 | 0 | 60 | - |
| 180 | 60 | 303 | <0.5 | <0.01 | 0 | 0 | 60 | - |
| 181 | 70 | 60 | 84.2 | 1.4 | 0 | 46.5 | 60 | - |
| 182 | 70 | 121 | 147.6 | 1.22 | 0 | 46.5 | 60 | - |
| 183 | 70 | 120 | 192.3 | 1.60 | - | 46.5 | 60/120 | 4.0/1.0 |
| 184 | 70 | 122 | 32.8 | 0.27 | 0 | 15.5 | 60 | - |
| 185 | 70 | 120 | 195.6 | 1.63 | - | 46.5 | 60/120 | 4.4/0.6 |
| 186 | 70 | 123 | 198.8 | 1.62 | 0 | 46.5 | 60 | - |
| 187 | 70 | 121 | 42.0 | 0.35 | 0 | 23.3 | 60 | - |

**TABLE 1B**

| **Dimethylsilanediylbis{1-[2-isopropyl, 4-(2-biphenylyl)indenyl]}zirconium dimethyl/NCA** | | | | | | | | |
|---|---|---|---|---|---|---|---|---|
| RUN # | Total Ethylene (wt %) | Ethylene in Rubber (wt%) | Total rubber (wt %) | Final MFR (g/10 min.) | Melting Point (°C) | MW (X 10⁻³) | MWD | IV Of Copolymer (dl/g) |
| 179 | - | - | - | - | - | - | | - |
| 180 | - | - | - | - | - | - | | - |
| 181 | - | - | - | 390.37 | 158.38 | 88.1 | 2.17 | - |
| 182 | - | - | - | 228.3 | 158.3 | 101.0 | 2.19 | - |
| 183 | 4.283 | 37.52 | 11.42 | 165.76 | 157.77 | 103.7 | 2.51 | 1.54 |
| 184 | - | - | - | 99.02 | 158.57 | 132.0 | 2.07 | - |
| 185 | 4.304 | 55.95 | 7.69 | 148.85 | 157.7, minor 160.4 | 107.7 | 2.42 | 1.98 |
| 186 | - | - | - | 511.88 | 156.84, minor 161.44 | 77.4 | 2.23 | - |
| 187 | - | - | - | 126.76 | 158.03 | 132.1 | 2.40 | - |

**TABLE2A**

| **Dimethylsilanediylbis{1-[2-isopropyl, 4-(2-biphenylyl)indenyl]}zirconium dichloride/MAO** | | | | | | | | |
|---|---|---|---|---|---|---|---|---|
| RUN # | TEMP (°C) | Cat. Amount (mg) | Yield (g) | Efficiency (Kg/g cat) | C₂= (delta kPa) | H₂ (mmole) | Time split (min.) | C₂=/C₃= flow rates (1/min.) |
| 188 | 60 | 45 | 5.6 | 0.12 | 0 | 0 | 60 | - |
| 189 | 60 | 300 | 83.7 | 0.28 | 0 | 0 | 60 | - |
| 190 | 70 | 60 | 188.0 | 3.13 | - | 46.5 | 60/120 | 4.0/1.0 |
| 191 | 70 | 61 | 201.6 | 3.30 | - | 46.5 | 60 | - |
| 192 | 70 | 60 | 234.8 | 3.91 | - | 46.5 | 60/120 | 4.4/0.6 |
| 193 | 70 | 60 | 66.9 | 1.12 | - | 15.5 | 60 | - |
| 194 | 70 | 61 | 107.5 | 1.76 | - | 31.0 | 60 | - |
| 195 | 70 | 301 | 125.8 | 0.42 | - | 7.8 | 25 | - |
| 196 | 70 | 63 | 150.8 | 2.39 | - | 46.5 | 60 | - |
| 197 | 70 | 150 | 222.9 | 1.49 | - | 31.0 | 60 | - |
| 198 | 70 | 150 | 233.0 | 1.55 | - | 31.0 | 60 | - |

**TABLE2B**

| **Dimethylsilanediylbis{1-[2-isopropyl, 4-(2-biphenylyl)indenyl]}zirconium dicloride/MAO** | | | | | | | | |
|---|---|---|---|---|---|---|---|---|
| RUN # | Total Ethylene (wt %) | Ethylene in Rubber (wt%) | Total rubber (wt %) | Final MFR (g/10 min.) | Melting Point (°C) | MW (X10⁻³) | MWD | IV of Copolymer (dl/g) |
| 188 | - | - | - | | 158.10 | 266.9 | 2.21 | - |
| 189 | - | - | - | 2.56 | 158.90 | 285.1 | 2.19 | - |
| 190 | 3.588 | 40.79 | 8.80 | 102.36 | 157.77 | 132.3 | 3.26 | 1.86 |
| 191 | - | - | - | 74.31 | 157.10 | 129.1 | 2.53 | - |
| 192 | 5.476 | 55.13 | 9.93 | 82.31 | 157.57 | 142.6 | 3.15 | 2.46 |
| 193 | - | - | - | 11.04 | 157.90 | 211.8 | 2.55 | - |
| 194 | - | - | - | 24.95 | 156.70 | 169.1 | 2.41 | - |
| 195 | - | - | - | 39.42 | 157.57 | 168.4 | 2.12 | - |
| 196 | - | - | - | 158.6 | 156.04, minor 160.7 | 114.3 | 2.43 | - |
| 197 | - | - | - | 33.95 | 156.85, minor 160.14 | 149.7 | 2.30 | - |
| 198 | - | - | - | 35.57 | 157.25 | 150.7 | 2.30 | - |

**TABLE 2C**

| **Dimethylsilanediylbis{1-[2-isopropyl, 4-(2-biphenylyl)indenyl]}zirconium dichloride/MAO** | | | | | | | |
|---|---|---|---|---|---|---|---|
| RUN # | Meso Run Length (Monomer Units) | Diad (%) | Stereo Misinsertions /10000 Monomer Units | 2,1-Misinsertions /10000 Monomer Units | 1,3-Misinsertions /10000 Monomer Units | Xylene Solubles (wt %) | Xylene Insolubles (wt %) |
| 191 | 245 | 99.6 | 23.9 | 0 | 16.7 | 0.53 | 99.64 |
| 197 | 278 | 99.6 | 20.0 | 0 | 15.9 | 0.87 | 99.09 |

**TABLE3A**

| **Dimethylsilanediylbis{1-[2-isopropyl, 4-(2-biphenylyl)indenyl]}zirconium dimethyl/MAO** | | | | | | | | |
|---|---|---|---|---|---|---|---|---|
| RUN # | TEMP (°C) | Cat. Amount (mg) | Yield (g) | Efficiency (Kg/g cat) | C₂= (delta kPa) | H₂ (mmole) | Time split (min.) | C₂=/C₃= flow rates (l/min.) |
| 199 | 70 | 61 | 168.4 | 2.76 | 0 | 46.5 | 60 | - |
| 200 | 70 | 101 | 180.2 | 1.78 | 0 | 31.0 | 60 | - |
| 201 | 70 | 101 | 186.1 | 1.84 | - | 31.0 | 60 | - |
| 202 | 70 | 62 | 141.3 | 2.28 | - | 31.0 | 60/120 | 4.4/0.6 |
| 203 | 70 | 60 | 138.5 | 2.31 | - | 31.0 | 60/120 | 4.4/0.6 |

**TABLE3B**

| **Dimethylsilanediylbis{1-[2-isopropyl, 4-(2-biphenylyl)indenyl]}zirconium dimethyl/MAO** | | | | | | | | |
|---|---|---|---|---|---|---|---|---|
| RUN # | Total Ethylene (wt %) | Ethylene in Rubber (wt%) | Total rubber (wt %) | Final MFR (g/10 min.) | Melting Point (°C) | MW (X 10⁻³) | MWD | IV Of Copolymer (dl/g) |
| 199 | - | - | - | 143.13 | 156.04, minor 160.17 | 175.9 | 21.02 | - |
| 200 | - | - | - | 38.98 | 160.37 | 149.9 | 2.22 | - |
| 201 | - | - | - | 26.82 | 155.71 | 153.4 | 2.31 | - |
| 202 | 5.817 | 55.61 | 10.46 | 26.41 | 157.77 | 172.5 | 3.29 | 3.14 |
| 203 | 5.549 | 56.39 | 9.84 | 44.55 | 157.77 | 165.6 | 2.99 | 2.85 |

The metallocenes in the above Examples and Tables are represented by formula (I) as follows:
M¹ = zirconium,
R¹ , R²= Cl (methyl in Examples 1 and 3),
R⁴ R⁵, R⁶, R⁷ = H
R¹³ = Me₂Si

| **Ex.(Table)** | **R³** | **R¹²** | **R¹¹** | **R¹⁰** | **R⁹** | **R⁸** |
|---|---|---|---|---|---|---|
| **1** | iso-Pr | Ph | H | H | H | H |
| **2** | iso-Pr | Ph | H | H | H | H |
| **3** | iso-Pr | Ph | H | H | H | H |

| | | | | | | |
|---|---|---|---|---|---|---|
| iso-Pr = Isopropyl; Ph = Phenyl | | | | | | |

## Claims

1. A compound represented by the formula: 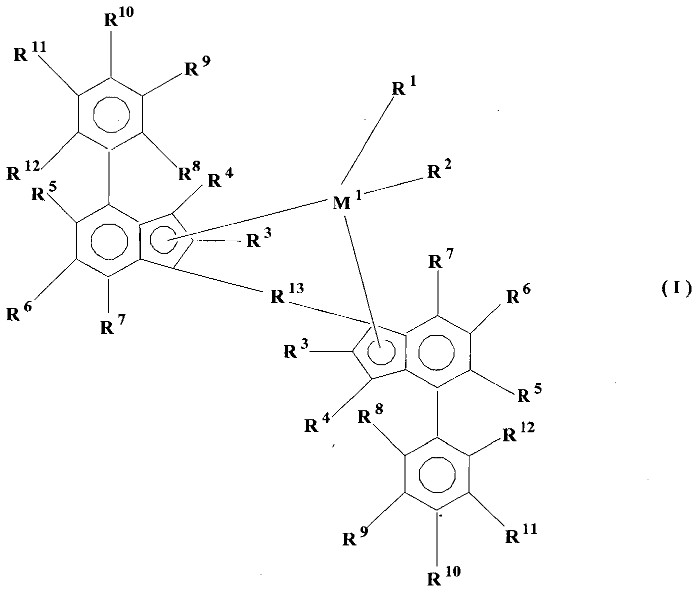 wherein:
M¹ is selected from zirconium or hafnium;
R¹ and R² are selected from hydrogen, halogen, hydroxy, C₁-C₁₀ alkyl groups, C₁-C₁₀ alkoxy groups, C₆-C₁₄ aryl groups, C₆-C₁₄ aryloxy groups, C₂-C₁₀ alkenyl groups, C₇-C₄₀ arylalkyl groups, C₇-C₄₀ alkylaryl groups and C₇-C₄₀ arylalkenyl groups; or R¹ and R² are joined together to form a C₄-C₄₀ alkanediyl group or a conjugated C₄-C₄₀ diene ligand which is coordinated to M¹ in a metallacyclopentene fashion; or R¹ and R² represent a conjugated diene, optionally substituted with one or more groups independently selected from hydrocarbyl, trihydrocarbylsilyl and trihydrocarbylsilylhydrocarbyl groups, said diene having a total of up to 40 atoms not counting hydrogen and forming a π complex with M¹;
R³ is selected from isopropyl, isobutyl, sec-butyl, tert-butyl and phenyl groups;
R⁴, R⁵, R⁶ and R⁷ are each independently selected from hydrogen, halogen, C₁-C₁₀ alkyl groups, C₆-C₁₄ aryl groups, C₂-C₁₀ alkenyl groups, C₇-C₄₀ arylalkyl groups, C₇-C₄₀ alkylaryl groups, C₈-C₄₀ arylalkenyl groups, and -NR'₂, -SR', -OR', -SiR'₃, -OSiR'₃ and - PR'₂ radicals wherein each R' is independently selected from halogen, C₁-C₁₀ alkyl groups and C₆-C₁₄ aryl groups; or two or more adjacent radicals R⁵, R⁶ and R⁷ together with the atoms connecting them may form one or more rings;
R⁸, R⁹, R¹⁰ and R¹¹ are each independently as defined for R⁴, R⁵, R⁶ and R⁷, provided that two or more adjacent radicals R⁸, R⁹, R¹⁰ and R¹¹ together with the atoms connecting them may form one or more rings ;
R¹² is selected from n-propyl, isopropyl, n-butyl, isobutyl, see-butyl, tert-butyl, phenyl, tolyl, benzyl and naphthyl groups;
R¹³ is selected from 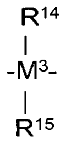 wherein:
R¹⁴ and R¹⁵ are each independently selected from hydrogen, halogen, C₁-C₂₀ alkyl groups, C₆-C₃₀ aryl groups, C₁-C₂₀ alkoxy groups, C₂-C₂₀ alkenyl groups, C₇-C₄₀ arylalkyl groups, C₈-C₄₀ arylalkenyl groups and C₇-C₄₀ alkylaryl groups, or R¹⁴ and R¹⁵, together with the atom(s) connecting them, form a ring; and M³ is selected from carbon and silicon.

2. The compound of claim 1, wherein R¹ and R² are selected from chlorine and C₁-C₆ alkyl groups.

3. The compound of claim 1 or 2, wherein R¹ and R² are methyl groups.

4. The compound of claim 1, wherein R³ is selected from isopropyl, isobutyl, sec-butyl and tert-butyl.

5. The compound of claim 1 or 2, wherein R³ is an isopropyl group.

6. The compound of claims 1 to 5, wherein R⁴ is hydrogen.

7. The compound of claim 1, wherein R¹⁴ and R¹⁵ are independently selected from C₁-C₄ alkyl groups and C₆-C₁₀ aryl groups.

8. The compound of any of claims 1 to 7, wherein at least one of R⁴ and R⁸ is hydrogen.

9. The compound of any of claims 1 to 8, wherein each of R⁴ and R⁸ is hydrogen.

10. A catalyst composition comprising the product of a compound of claims 1 and a cocatalyst.

11. The catalyst composition of claim 10, which further comprises a support material.

12. The catalyst composition of claim 11, wherein the support material is selected from silica, alumina, silica-alumina, magnesium chloride and mixtures thereof.

13. A polymerization process comprising contacting, under polymerization conditions, one or more ethylenically unsaturated mono-olefins and a catalyst composition, said catalyst composition comprising the product of a compound according to any of claims 1 to 9.

14. The process of claim 13, wherein said monoolefins comprise compounds of the formula R³CH=CHR^{b} wherein R^{a} and R^{b} are each independently selected from hydrogen, alkyl and alkenyl radicals having 1 to 14 carbon atoms or, together with the carbon atoms to which they are connected, form a ring having 4 to 8 carbon atoms.

15. The process of claims 13 or 14, wherein said process is carried out at a temperature ranging from 30° C to 80° C.

## Patentansprüche

1. Verbindung, die durch die Formel: 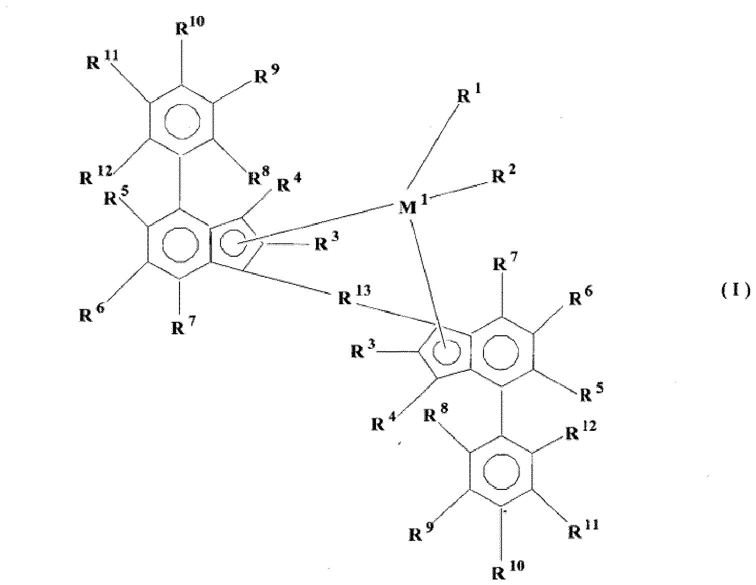 wiedergegeben wird, wobei:
M¹ ausgewählt ist aus Zirconium oder Hafnium;
R¹ und R² ausgewählt sind aus Wasserstoff, Halogen, Hydroxy, C₁- bis C₁₀-Alkylgruppen, C₁- bis C₁₀-Alkoxygruppen, C₆- bis C₁₄-Arylgruppen, C₆- bis C₁₄-Aryloxygruppen, C₁₂-bis C₁₀-Alkenylgruppen, C₇- bis C₄₀-Arylalkylgruppen, C₇-bis C₄₀-Alkylarylgruppen und C₇- bis C₄₀-Arylalkenyl-gruppen; oder R¹ und R² miteinander verbunden sind, um eine C₄- bis C₄₀-Alkandiylgruppe oder einen konjugierten C₄- bis C₄₀-Dienliganden, der nach Art eines Metallacyclopentens mit M¹ koordiniert, zu bilden; oder R¹ und R² ein konjugiertes Dien darstellen, gegebenenfalls mit einem oder mehreren Gruppen unabhängig ausgewählt aus Kohlenwasserstoff-, Trikohlenwasserstoffsilyl und Trikohlenwasserstoffsilylkohlenwasserstoffgruppen substituiert, wobei das Dien insgesamt bis zu 40 Atome, Wasserstoff nicht einberechnet, besitzt und einen π-Komplex mit M¹ bildet;
R³ ausgewählt ist aus Isopropyl-, Isobutyl-, sec-Butyl, tert-Butyl und Phenylgruppen;
R⁴, R⁵, R⁶ und R⁷ jeweils unabhängig ausgewählt sind aus Wasserstoff, Halogen, C₁- bis C₁₀-Alkylgruppen, C₆- bis C₁₆-Arylgruppen, C₂- bis C₁₀-Alkenylgruppen, C₇- bis C₄₀-Arylalkylgruppen, C₇- bis C₄₀-Alkylarylgruppen, C₈- bis C₄₀-Arylalkenylgruppen und -NR'₂-, -SR'-, -OR'-, -SiR'₃-, -OSiR'₃- und -PR'₂-Resten, wobei jedes R' unabhängig ausgewählt ist aus Halogen, C₁- bis C₁₀-Alkylgruppen und C₆- bis C₁₄-Arylgruppen; oder 2 oder mehr benachbarte Reste R⁵, R⁶ und R⁷ zusammen mit den sie verbindenden Atomen einen oder mehrere Ringe bilden;
R⁸, R⁹, R¹⁰ und R¹¹ jeweils unabhängig sind wie es für R⁴, R⁵, R⁶ und R⁷ definiert ist, mit der Maßgabe, dass zwei oder mehr benachbarte Reste R⁸, R⁹, R¹⁰ und R¹¹ zusammen mit den sie verbindenden Atomen einen oder mehrere Ringe bilden können;
R¹² ausgewählt ist aus n-Propyl-, Isopropyl-, n-Butyl-, Isobutyl-, sec-Butyl-, tert-Butyl-, Phenyl-, Tolyl-, Benzyl- und Naphthylgruppen;
R¹³ ausgewählt ist aus 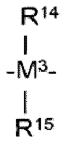 wobei:
R¹⁴ und R¹⁵ jeweils unabhängig ausgewählt sind aus Wasserstoff, Halogen, C₁- bis C₂₀-Alkylgruppen, C₆- bis C₃₀-Arylgruppen, C₁- bis C₂₀-Alkoxygruppen, C₂- bis C₂₀-Alkenyl-gruppen, C₇- bis C₄₀-Arylalkylgruppen, C₈- bis C₄₀-Arylalkenylgruppen und C₇- bis C₄₀-Alkylarylgruppen, oder R¹⁴ und R¹⁵ zusammen mit dem oder den sie verbindenden Atom(en) einen Ring bilden; und M³ ausgewählt ist aus Kohlenstoff und Silicium.

2. Verbindung nach Anspruch 1, wobei R¹ und R² ausgewählt sind aus Chlor und C₁- bis C₆-Alkylgruppen.

3. Verbindung nach Anspruch 1 oder 2, wobei R¹ und R² Methylgruppen sind.

4. Verbindung nach Anspruch 1, wobei R³ ausgewählt ist aus Isopropyl, Isobutyl, sec-Butyl und tert-Butyl.

5. Verbindung nach Anspruch 1 oder 2, wobei R³ eine Isopropylgruppe ist.

6. Verbindung nach Ansprüchen 1 bis 5, wobei R⁴ Wasserstoff ist.

7. Verbindung nach Anspruch 1, wobei R¹⁴ und R¹⁵ unabhängig ausgewählt sind aus C₁- bis C₄-Alkylgruppen und C₆- bis C₁₀-Arylgruppen.

8. Verbindung nach einem der Ansprüche 1 bis 7, wobei mindestens eines von R⁴ und R⁸ Wasserstoff ist.

9. Verbindung nach einem der Ansprüche 1 bis 8, wobei jedes von R⁴ und R⁸ Wasserstoff ist.

10. Katalysatorzusammensetzung, die das Produkt einer Verbindung gemäß Anspruch 1 und einem Cokatalysator ist.

11. Katalysatorzusammensetzung nach Anspruch 10, die ferner Trägermaterial umfasst.

12. Katalysatorzusammensetzung nach Anspruch 11, wobei das Trägermaterial ausgewählt ist aus Siliciumdioxid, Aluminiumoxid, Siliciumdioxid-Aluminiumoxid, Magnesiumchlorid und Mischungen davon.

13. Polymerisationsverfahren, bei dem ein oder mehrere ethylenisch ungesättigte Monoolefine und eine Katalysatorzusammensetzung unter Polymerisationsbedingungen in Kontakt gebracht werden, wobei die Katalysatorzusammensetzung das Produkt einer Verbindung gemäß einem der Ansprüche 1 bis 9 umfasst.

14. Verfahren nach Anspruch 13, wobei die Monoolefine Verbindungen der Formal R^{a}CH=CHR^{b} umfassen, wobei R^{a} und R^{b} jeweils unabhängig ausgewählt sind aus Wasserstoff, Alkyl-und Alkenylresten mit 1 bis 14 Kohlenstoffatomen, oder, zusammen mit den Kohlenstoffatomen, mit denen sie verbunden sind, einen Ring mit 4 bis 8 Kohlenstoffatomen bilden.

15. Verfahren nach Anspruch 13 oder 14, wobei das Verfahren bei einer Temperatur im Bereich von 30°C bis 80°C durchgeführt wird.

## Revendications

1. Composé représenté par la formule : 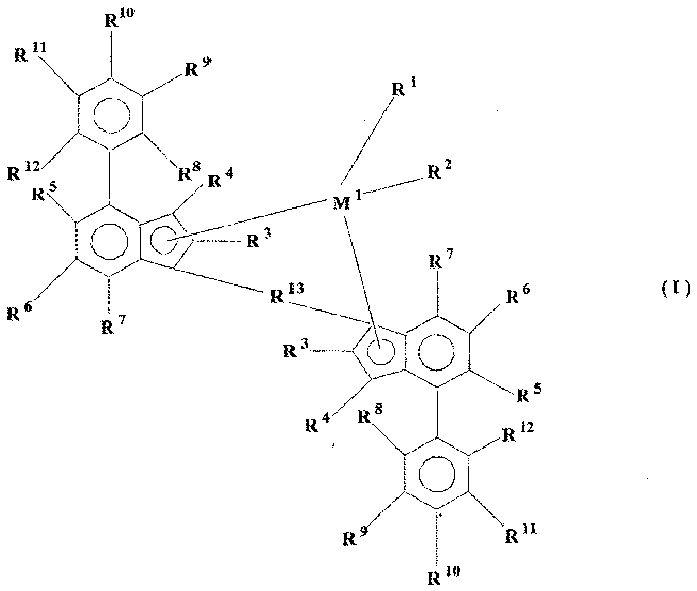 dans laquelle :
M¹ est choisi parmi le zirconium et le hafnium ;
R¹ et R² sont choisis parmi l'hydrogène, les halogènes, l'hydroxyle, les groupes alkyle en C₁-C₁₀, les groupes alcoxy en C₁-C₁₀, les groupes aryle en C₆-C₁₄, les groupes aryloxy en C₆-C₁₄, les groupes alcényle en C₂-C₁₀, les groupes arylalkyle en C₇-C₄₀, les groupes alkylaryle en C₇-C₄₀ et les groupes arylalcényle en C₇-C₄₀ ; ou bien R¹ et R² sont reliés pour former un groupe alcanediyle en C₄-C₄₀ ou un ligand diène conjugué en C₄-C₄₀ qui est coordonné à M¹ à la manière d'un métallo-cyclopentène ; ou bien R¹ et R² représentent un diène conjugué, éventuellement substitué par un ou plusieurs groupes indépendamment choisis parmi les groupes hydrocarbyle, trihydrocarbylsilyle et trihydrocarbylsilylhydrocarbyle, ledit diène portant au total jusqu'à 40 atomes sans compter l'hydrogène et formant un complexe π avec M¹ ;
R³ est choisi parmi les groupes isopropyle, isobutyle, sec-butyle, tert-butyle et phényle ;
R⁴, R⁵, R⁶ et R⁷ sont chacun indépendamment choisis parmi l'hydrogène, les halogènes, les groupes alkyle en C₁-C₁₀, les groupes aryle en C₆-C₁₄, les groupes alcényle en C₂-C₁₀, les groupes arylalkyle en C₇-C₄₀, les groupes alkylaryle en C₇-C₄₀, les groupes arylalcényle en C₈-C₄₀, et les radicaux -NR'₂, -SR', -OR', -SiR'₃, -OSiR'₃ et -PR'₂ dans lesquels chaque R' est indépendamment choisi parmi les halogènes, les groupes alkyle en C₁-C₁₀ et les groupes aryle en C₆-C₁₄ ; ou bien au moins deux radicaux R⁵ R⁶ et R⁷ adjacents, conjointement avec les atomes les reliant, peuvent former un ou plusieurs cycles ;
R⁸, R⁹, R¹⁰ et R¹¹ sont chacun indépendamment tels que définis pour R⁴, R⁵, R⁶ et R⁷, à condition qu'au moins deux radicaux R⁸, R⁹, R¹⁰ et R¹¹ adjacents, conjointement avec les atomes les reliant, puissent former un ou plusieurs cycles ;
R¹² est choisi parmi les groupes n-propyle, isopropyle, n-butyle, isobutyle, sec-butyle, tert-butyle, phényle, tolyle, benzyle et naphtyle ;
R¹³ est choisi parmi les groupes 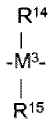 dans lesquels :
R¹⁴ et R¹⁵ sont chacun indépendamment choisis parmi l'hydrogène, les halogènes, les groupes alkyle en C₁-C₂₀, les groupes aryle en C₆-C₃₀, les groupes alcoxy en C₁-C₂₀, les groupes alcényle en C₂-C₂₀, les groupes arylalkyle en C₇-C₄₀, les groupes arylalcényle en C₈-C₄₀ et les groupes alkylaryle en C₇-C₄₀, ou bien R¹⁴ et R¹⁵, conjointement avec le(s) atome(s) les reliant, forment un cycle ; et
M³ est choisi parmi le carbone et le silicium.

2. Composé selon la revendication 1, dans lequel R¹ et R² sont choisis parmi le chlore et les groupes alkyle en C₁-C₆.

3. Composé selon la revendication 1 ou 2, dans lequel R¹ et R² sont des groupes méthyle.

4. Composé selon la revendication 1, dans lequel R³ est choisi parmi les groupes isopropyle, isobutyle, sec-butyle et tert-butyle.

5. Composé selon la revendication 1 ou 2, dans lequel R³ est un groupe isopropyle.

6. Composé selon les revendications 1 à 5, dans lequel R⁴ est un hydrogène.

7. Composé selon la revendication 1, dans lequel R¹⁴ et R¹⁵ sont indépendamment choisis parmi les groupes alkyle en C₁-C₄ et les groupes aryle en C₆-C₁₀ .

8. Composé selon l'une quelconque des revendications 1 à 7, dans lequel l'un au moins de R⁴ et R⁸ est un hydrogène.

9. Composé selon l'une quelconque des revendications 1 à 8, dans lequel R⁴ et R⁸ sont chacun un hydrogène.

10. Composition catalytique comprenant le produit d'un composé de la revendication 1 et un cocatalyseur.

11. Composition catalytique selon la revendication 10, qui comprend en outre un matériau de support.

12. Composition catalytique selon la revendication 11, dans laquelle le matériau de support est choisi parmi la silice, l'alumine, la silice-alumine, le chlorure de magnésium et les mélanges de ceux-ci.

13. Procédé de polymérisation comprenant la mise en contact, dans des conditions de polymérisation, d'une ou plusieurs monooléfines éthyléniquement insaturées et d'une composition catalytique, ladite composition catalytique comprenant le produit d'un composé selon l'une quelconque des revendications 1 à 9.

14. Procédé selon la revendication 13, dans lequel lesdites monooléfines comprennent des composés de formule R^{a}CH=CHR^{b} dans laquelle R^{a} et R^{b} sont chacun indépendamment choisis parmi l'hydrogène et les radicaux alkyle et alcényle portant 1 à 14 atomes de carbone ou, conjointement avec les atomes de carbone auxquels ils sont attachés, forment un cycle portant 4 à 8 atomes de carbone.

15. Procédé selon la revendication 13 ou 14, ledit procédé étant réalisé à une température allant de 30 °C à 80 °C.
